(19) Europäisches Patentamt
European Patent Office
Office européen des brevets

(11) **EP 4 399 510 B1**

(12) **FASCICULE DE BREVET EUROPEEN**

(45) Date de publication et mention de la délivrance du brevet:
**16.07.2025 Bulletin 2025/29**

(21) Numéro de dépôt: **22789262.7**

(22) Date de dépôt: **08.09.2022**

(51) Classification Internationale des Brevets (IPC):
**G01N 23/046** *(2018.01)* **G06T 11/00** *(2006.01)*

(52) Classification Coopérative des Brevets (CPC):
**G01N 23/046; G06T 11/005;** G01N 2223/1016;
G01N 2223/401; G01N 2223/419; G01N 2223/60;
G01N 2223/645

(86) Numéro de dépôt international:
**PCT/FR2022/051698**

(87) Numéro de publication internationale:
**WO 2023/037078 (16.03.2023 Gazette 2023/11)**

(54) **PROCEDE, DISPOSITIF ET PROGRAMME D'ORDINATEUR DE CONTROLE D'UNE PIECE PAR RADIOGRAPHIE AUX RAYONS X**

VERFAHREN, VORRICHTUNG UND COMPUTERPROGRAMM ZUR PRÜFUNG EINES WERKSTÜCKS MITTELS RÖNTGENRADIOGRAPHIE

METHOD, DEVICE AND COMPUTER PROGRAM FOR CONTROLLING A PART BY X-RAY RADIOGRAPHY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.09.2021 FR 2109443**

(43) Date de publication de la demande:
**17.07.2024 Bulletin 2024/29**

(73) Titulaires:
• **SAFRAN**
**75015 Paris (FR)**
• **Centre National de la Recherche Scientifique (CNRS)**
**75016 Paris (FR)**
• **Ecole Normale Supérieure Paris-Saclay**
**91190 Gif-sur-Yvette (FR)**

(72) Inventeurs:
• **FRAGNAUD, Cédric**
**77550 Moissy-Cramayel (FR)**
• **ROUX, Stéphane**
**93110 Rosny-sous-Bois (FR)**
• **BETANCUR, Julian**
**77550 Moissy-Cramayel (FR)**

(74) Mandataire: **Regimbeau**
**20, rue de Chazelles**
**75847 Paris Cedex 17 (FR)**

(56) Documents cités:
**US-B2- 10 902 650**

• **"Bildverarbeitung fuer die Medizin 2007. Proceedings des Workshops vom 25.-27. März 2007 in München", 1 January 2007 (2007-01-01), pages 46 - 50, XP055915705, ISBN: 978-3-540-71090-5, Retrieved from the Internet <URL:http://ftp.informatik.rwth-aachen.de/Publications/CEUR-WS/Vol-283/p046.pdf> DOI: 10.1007/978-3-540-71091-2_10**
• HSIEH JIANG ET AL: "An iterative approach to the beam hardening correction in cone beam CT", MEDICAL PHYSICS, AIP, MELVILLE, NY, US, vol. 27, no. 1, 1 January 2000 (2000-01-01), pages 23 - 29, XP012010948, ISSN: 0094-2405, DOI: 10.1118/1.598853

- **TRIEB KLEMENS ET AL: "Non-Destructive Testing of Ceramic Knee Implants Using Micro-Computed Tomography", THE JOURNAL OF ARTHROPLASTY, ELSEVIER, AMSTERDAM, NL, vol. 34, no. 9, 12 May 2019 (2019-05-12), pages 2111 - 2117, XP085782639, ISSN: 0883-5403, [retrieved on 20190512], DOI: 10.1016/ J.ARTH.2019.05.006**

**Description**

L'invention concerne un procédé, un dispositif et un programme d'ordinateur pour le contrôle non destructif d'une pièce par radiographie aux rayons X.

Le domaine de l'invention concerne les pièces aéronautiques, notamment les aubes de turbomachines, notamment leurs aubes de turbine.

Le Contrôle Non Destructif (CND) des pièces aéronautiques est un élément essentiel de la sûreté de fonctionnement des avions dont l'objectif est d'éviter tout défaut qui pourrait provoquer une défaillance en vol. Parmi les méthodes de CND, la radiographie rayons X se distingue par sa capacité à visualiser l'intérieur de la pièce de manière peu/ pas intrusive et à résoudre des détails jusqu'à une taille micrométrique. Ces performances l'ont rendu populaire dans le secteur aéronautique. La radiographie rayons X permet d'imager la structure interne de la pièce en transmission. La tomographie consiste en l'acquisition d'un grand nombre de radiographies lors d'une rotation, la plupart du temps complète, d'une pièce dans le but de calculer une image tridimensionnelle complète d'une pièce. L'important temps d'acquisition de ces images tomographiques conduit les industriels à ne considérer qu'un nombre limité d'images radiographiques (appelées radiographies ou projections par la suite) pour réaliser le CND de santé matière et dimensionnel (indications géométriques tridimensionnelles). Toutefois, des artefacts d'images dus au durcissement de faisceau et à la diffusion Compton, affectent les radiographies et rendent délicate voire incertaine l'analyse métrologique effectuée lors du CND. Le document "Beam hardening correction with an iterative scheme using an exact backward projector and a polychromatic forward projector" par R. Bock et al, XP055915705 divulgue un traitement de ces artefacts.

Lorsqu'un grand nombre de projections est considéré, par exemple dans le cadre de la tomographie, ces artefacts peuvent être négligés. En revanche, ils doivent être pris soigneusement en compte lorsque le CND est réalisé à partir de peu de vues.

Les cabines de CND de radiographie numérique (des marques déposées telles que Yxlon, GE, Nikon) ou les logiciels d'exploitation (Vg Studio, Aviso, RX solution) et de traitement d'images obtenues par radiographie aux rayons X présentent tous des filtres pour aider le contrôleur dans sa tâche de sanction. Une radiographie (normalisée) est interprétée comme une image de l'atténuation des rayons X lors de la traversée de la pièce, atténuation elle-même reliée à l'épaisseur par une loi qui est souvent approximée par une fonction exponentielle (loi de Beer-Lambert). Les grandeurs d'intérêt dans la caractérisation des indications géométriques sont de nature tridimensionnelle, et leur estimation à partir des radiographies (images bidimensionnelles) est partielle et peu fiable. Ceci peut induire des erreurs non négligeables dans le contrôle, et rend la procédure de sanction sensible à la variation de l'angle de vue lors de l'acquisition de chaque image. L'analyse demande donc une connaissance précise de la géométrie du système cabine-pièce, et de la correction fidèle des artefacts d'images. L'utilisation de la tomographie aux rayons X implique l'acquisition d'un ou plusieurs milliers de projections, ce qui est couteux en temps et entraine également des étapes de traitement à considérer. Ainsi, il est préférable de n'acquérir qu'un faible nombre (de l'ordre d'une dizaine) de projections, soit typiquement une centaine de fois moins.

La sanction de pièce par radiographie aux rayons X à partir d'un faible nombre de vue est habituellement effectuée manuellement : des contrôleurs, techniciens spécialistes formés à cette tâche, analysent les images produites par le système à la recherche de toute anomalie. Les anomalies sont représentées par une variation anormale des niveaux de gris des images. Toutefois, des artefacts d'images altèrent ces niveaux de gris, rendant incertaine et difficile la sanction : lorsqu'un faible nombre d'images est considéré, les artefacts d'images ont un fort poids et ne peuvent pas être négligés. Ainsi, la réduction d'artefacts d'imageries pour la sanction de pièces aéronautiques à partir d'un nombre limité de projections est un élément crucial pour cette application. Pour des tensions d'accélération autour de 350 keV (typiquement utilisées pour acquérir des images d'aube de turbine), les artefacts à traiter sont essentiellement le durcissement de faisceau et la diffusion Compton.

Une variabilité inter et intra contrôleur existe, réduisant la fiabilité de la sanction. Par ailleurs, l'analyse minutieuse des images par les contrôleurs constitue un travail laborieux, fatiguant, aussi bien sur le plan physique que sur le plan psychologique.

Un objectif de l'invention est d'obtenir un procédé, un dispositif et un programme d'ordinateur pour le contrôle non destructif d'une pièce par radiographie aux rayons X, qui pallient les inconvénients mentionnés ci-dessus, en minimisant un ou plusieurs types d'artefacts d'images permettant alors l'exploitation d'un faible nombre de projections acquises pour réaliser le CND.

Acet effet, un premier objet de l'invention est un procédé de contrôle non destructif d'une pièce par radiographie en transmission, comportant les étapes suivantes, exécutées par un calculateur :

acquisition de N projections de la pièce à partir d'un dispositif de radiographie par transmission selon N angles de vue différents et prédéterminés de la pièce, où N est un entier naturel prescrit,

génération de N images calculées de la pièce à partir d'un modèle de référence de la pièce correspondant aux N angles de vue et à partir d'un vecteur $p$ de paramètres caractérisant la géométrie de projection de l'acquisition pour les N angles de vue à chacune de plusieurs itérations successives,

estimation, par les itérations successives, du vecteur $p$ à partir d'un vecteur initial $p = p_{ini}$ et d'au moins l'un d'un vecteur $c$ de paramètres à partir d'un vecteur initial $c = c_{ini}$ et d'un vecteur $\alpha$ de paramètres à partir d'un vecteur initial $\alpha = \alpha_{ini}$, où le vecteur $c$ des paramètres rend compte du durcissement de faisceau du rayonnement dans la pièce et le vecteur $\alpha$ des paramètres caractérise la diffusion Compton du rayonnement dans la pièce, par minimisation de la somme des normes des différences au carré entre les N projections acquises et les N images calculées,

traitement des N projections et/ ou des N images calculées comprenant un premier traitement et/ ou un deuxième traitement,

le premier traitement comportant une correction du durcissement de faisceau sur les N projections à partir du vecteur $c$ ayant été estimé ou une génération du durcissement de faisceau sur les N images calculées à partir du vecteur $c$ ayant été estimé,

le deuxième traitement comportant une correction de la diffusion Compton sur les N projections à partir du vecteur $\alpha$ ayant été estimé ou une génération de la diffusion Compton sur les N images calculées à partir du vecteur $\alpha$ ayant été estimé,

identification de défauts de la pièce par comparaison des N projections traitées aux N images calculées traitées.

L'invention permet ainsi le contrôle non destructif de pièces aéronautiques par radiographie aux rayons X, à partir d'un nombre limité de projections acquises. L'invention permet la sanction de pièces aéronautiques en utilisant un nombre limité de projections acquises (pouvant être par exemple inférieur ou égal à 1000) de la pièce inspectée. En effet, après application du traitement algorithmique décrit dans l'invention, les images acquises par le système et celles reproduites par simulation peuvent être quantitativement comparées, et une sanction fondée sur leurs différences est effectuée. Le procédé, le dispositif et le programme de contrôle suivant l'invention aident à la sanction de la pièce inspectée. La procédure étant paramétrée systématiquement, cette sanction est alors fiabilisée.

L'invention présent e une méthode de CND à partir d'un faible nombre de projections. L'invention permet d'augmenter la fiabilité du procédé et dispositif de contrôle, mais également sa performance en permettant la sanction de la pièce avec un nombre limité de projections. Pour cela, un ou plusieurs types d'artefact sont estimés à partir de leur modélisation. Cette estimation est utilisée soit pour corriger les artefacts dans les images acquises, soit pour les reproduire dans des images simulées à partir du modèle de la pièce idéale (par exemple son modèle de conception assistée par ordinateur ou modèle CAO). Cela est rendu possible par la reproduction des modifications en intensité des pixels, qualifiées d'artefacts, dues aux phénomènes physiques qui sont responsable d'écart par rapport à la simple loi de Beer-Lambert, tel que le durcissement de faisceau ou la diffusion Compton. Cette prise en compte permet une comparaison plus pertinente des niveaux de gris entre acquis et simulé, et donc une sanction plus précise. Une fois ces artefacts considérés, la méthode de CND proposée permet de mettre en évidence toutes les indications quelle que soit leur nature (sante matière, géométrique), ou leur position dans la pièce, indépendamment des conditions d'acquisitions utilisées (en suivant le processus de sanction par CND défini dans un contexte industriel), ou encore de la géométrie de la pièce. Le gain de fiabilité ne s'accompagne d'aucun autre coût, si ce n'est celui, modeste, de modélisation de la projection.

L'invention concerne notamment la mise en place d'un système de contrôle constitué d'un dispositif d'acquisition de radiographies aux rayons X d'une pièce composée d'un seul matériau connu, couplé à un algorithme de sanction et de validation. Le traitement algorithmique permet de minimiser un ou plusieurs types d'arte facts d'images attendus pour le matériau et la puissance du faisceau de rayons X utilisé, ou bien de les reproduire, de manière à rendre quantitativement comparables les images acquises et les images simulées.

Le durcissement de faisceau peut être corrigé par le calculateur en effectuant un étalonnage de l'atténuation puis une correction des intensités des images.

Suivant un mode de réalisation de l'invention, le procédé comporte à chaque itération l'estimation du vecteur $p$ des paramètres $p_i$ de la géométrie de projection de l'acquisition pour les N anglesde vue par le calculateur, cette estimation comportant :

le calcul de résidus de projection $\rho_p^{(n)} = P^{(n)} - \hat{P}^{(n)}$ à partir du vecteur des valeurs initiales $p = p_{ini}$

le calcul de champs $s_{p_i}^{(n)}$ de sensibilité selon

$$s_{p_i}^{(n)} = \left. \frac{\partial \hat{P}^{(n)}}{\partial p_i} \right|_{\boldsymbol{p}}$$

à partir du vecteur des valeurs initiales $p = p_{ini}$,

où

$\hat{P}^{(n)}$ sont les N images calculées pour les N angles de vue, $\hat{P}^{(n)}$ sont les N projections acquises de la pièce,

$p$ est le vecteur colonne des paramètres $p_i$ de la géométrie de projection,

$\boldsymbol{p_{ini}}$ est le vecteur colonne des valeurs initiales prescrites des paramètres $p_i$ de la géométrie de projection,

$n$ est un entier naturel désignant le numéro de l'angle de vue et allant de 1 à N,

$p$ est mis à jour selon $p* = p + \delta p*$, où

$p*$ est le vecteur colonne des paramètres $p_i$ de la géométrie de projection mis à jour,

$\delta p*$ est le vecteur colonne de variation des paramètres $p_i$ de la géométrie de projection et est calculé comme le $\delta p$ minimisant la somme des normes des différences au carré entre les résidus de projection $\rho_{\boldsymbol{p}}^{(n)}$ et le produit de $\delta p$ par $\boldsymbol{s}_{\boldsymbol{p}}^{(n)}$ pour $n$ allant de 1 à N,

$$\boldsymbol{\delta p}* = \arg \min_{\boldsymbol{\delta p}} \sum_{(n)} \left\| \rho_{\boldsymbol{p}}^{(n)} - \boldsymbol{s}_{\boldsymbol{p}}^{(n)} \, \boldsymbol{\delta p} \right\|^2$$

où $\delta p$ est un vecteur colonne,

$\boldsymbol{s}_{\boldsymbol{p}}^{(n)}$ est la matrice des champs $s_{p_i}^{(n)}$ de sensibilité.

Suivant un mode de réalisation de l'invention, le procédé comporte à chaque itération l'estimation du vecteur $c$ des paramètres $c_k$ d'étalonnage de durcissement de faisceau du rayonnement dans la pièce par le calculateur, cette estimation comportant:

le calcul de résidus de projection $\rho_c^{(n)} = P^{(n)} - \breve{P}^{(n)}$ à partir du vecteur des valeurs initiales $c = \boldsymbol{c_{ini}}$,

le calcul de champs $s_{c_k}^{(n)}$ de sensibilité selon

$$s_{c_k}^{(n)} = \left. \frac{\partial \breve{P}^{(n)}}{\partial c_k} \right|_{\boldsymbol{c}}$$

à partir du vecteur des valeurs initiales $\boldsymbol{c} = \boldsymbol{c_{ini}}$,

où $\check{P}^{(n)}(\boldsymbol{x}) = u\left(\hat{P}^{(n)}(\boldsymbol{x})\right)$ est l'image obtenue en appliquant la fonction $u(y)$ à l'intensité y de chacun des pixels $x$ de $\hat{P}^{(n)}$,

$\hat{P}^{(n)}$ sont les N images calculées pour les N angles de vue,

$P^{(n)}$ sont les N projections acquises de la pièce,

$c$ est le vecteur colonne des paramètres $c_k$ d'étalonnage de durcissement de faisceau,

$c_{ini}$ est un vecteur colonne des valeurs initiales prescrites des paramètres $c_k$ d'étalonnage de durcissement de faisceau de rayonnement dans la pièce,

$\varphi_k(y)$ est une base de fonctions de forme prescrites,

$$u(y) = \sum_{k=1}^{K_3} c_k \, \varphi_k(y)$$

$K_3$ est un entier naturel prescrit supérieur ou égal à 1,

$k$ est un entier naturel allant de 1 à $K_3$,

$c$ est mis à jour selon $c^* = c + \delta c^*$, où

$c^*$ est le vecteur colonne des paramètres $c_k$ d'étalonnage de durcissement de faisceau de rayonnement dans la pièce, ayant été mis à jour,

$\delta c^*$ est le vecteur colonne de variation des paramètres $c_k$ d'étalonnage de durcissement de faisceau de rayonnement dans la pièce et est calculé comme le $\delta c$ minimisant la somme des normes des différences au carré entre les résidus de projection $\rho_c^{(n)}$ et le produit de $\delta c$ par $\mathbf{s}_c^{(n)}$ pour n allant de 1 à N,

$$\delta\boldsymbol{c}^* = \arg\min_{\delta c} \sum_{(n)} \left\| \rho_c^{(n)} - \mathbf{s}_c^{(n)} \, \delta\boldsymbol{c} \right\|^2$$

où $\delta c$ est un vecteur colonne,

$\mathbf{s}_c^{(n)}$ est la matrice des champs $s_{c_k}^{(n)}$ de sensibilité.

Suivant un mode de réalisation de l'invention, le procédé comporte à chaque itération l'estimation du vecteur $\alpha$ des paramètres $\alpha_j$ de diffusion Compton du rayonnement dans la pièce par le calculateur, cette estimation comportant:

le calcul de résidus de projection $\rho_\alpha^{(n)} = P^{(n)} - \tilde{P}^{(n)}$ à partir d'un vecteur des valeurs initiales $\alpha = \alpha_{ini}$,

le calcul de champs $s_{\alpha_j}^{(n)}$ de sensibilité selon

$$s_{\alpha_j}^{(n)} = \left.\frac{\partial \tilde{P}^{(n)}}{\partial \alpha_j}\right|_\alpha$$

à partir du vecteur des valeurs initiales $\alpha = \alpha_{ini}$,

où $P^{(n)}$ sont les N projections acquises de la pièce,

$\hat{P}^{(n)}$ sont les N images calculées pour les N angles de vue,

$$\tilde{P}^{(n)} = \breve{P}^{(n)} + \breve{P}^{(n)} * K$$ est l'image obtenue en convoluant des images $\breve{P}^{(n)}$ simulées, ayant été obtenues à partir au moins des N images $\hat{P}^{(n)}$ calculées, avec le noyau $\delta + K$,

$\alpha$ est le vecteur colonne des paramètres $\alpha_j$ de diffusion Compton du rayonnement dans la pièce,

$\alpha_{ini}$ est un vecteur colonne des valeurs initiales prescrites des paramètres $\alpha_j$ de diffusion Compton du rayonnement dans la pièce,

$K$ est le noyau de convolution défini par

$$K(x) = \sum_{j=1}^{K_2} \alpha_j \left( g_{\sigma_j}(x) - \delta(x) \right)$$

$K_2$ est un entier naturel prescrit supérieur ou égal à 1,

$j$ est un entier naturel allant de 1 à $K_2$,

$g_{\sigma_j}$, un noyau gaussien bidimensionnel d'écart-type $\sigma_j$ prescrit,

$\delta(x)$ est la fonction de Dirac au pixel $x$,

$\alpha$ est mis à jour selon $\alpha^* = \alpha + \delta\alpha^*$, où

$\alpha^*$ est le vecteur colonne des paramètres $\alpha_j$ de diffusion Compton du rayonnement dans la pièce, ayant été mis à jour,

$\delta\alpha^*$ est le vecteur colonne de variation des paramètres $\alpha_j$ de diffusion Compton du rayonnement dans la pièce et est calculé comme le $\delta\alpha$ minimisant la somme des normes des différences au carré entre les résidus de projection $\rho_\alpha^{(n)}$ et le produit de $\delta\alpha$ par $s_\alpha^{(n)}$ pour $n$ allant de 1 à N,

$$\delta\alpha^* = \arg\min_{\delta\alpha} \sum_{(n)} \left\| \rho_\alpha^{(n)} - s_\alpha^{(n)} \delta\alpha \right\|^2$$

où $\delta\alpha$ est un vecteur colonne,

$s_\alpha^{(n)}$ est la matrice *des champs* $s_{\alpha_j}^{(n)}$ de sensibilité.

Suivant un mode de réalisation de l'invention, $\breve{P}^{(n)}(x) = u\left(\hat{P}^{(n)}(x)\right)$ est l'image simulée, obtenue en appliquant la fonction $u(y)$ à l'intensité de chacun des pixels $x$ de l'image calculée $\hat{P}^{(n)}$.

Suivant un mode de réalisation de l'invention, N est inférieur ou égal à 1000.

Un deuxième objet de l'invention est un programme d'ordinateur, comportant des instructions de code pour la mise en œuvre des étapes suivantes d'un procédé de contrôle non destructif d'une pièce par radiographie par transmission, lorsqu'il est exécuté par un calculateur :

réception de N projections de la pièce à partir d'un dispositif de radiographie par transmission selon N angles de vue différents et prédéterminés de la pièce, où N est un entier naturel prescrit,

génération de N images calculées de la pièce à partir d'un modèle de référence de la pièce correspondant aux N angles de vue et à partir d'un vecteur $p$ de paramètres caractérisant la géométrie de projection de l'acquisition pour les N angles de vue à chacune de plusieurs itérations successives,

estimation, par les itérations successives, du vecteur $p$ à partir d'un vecteur initial $p = p_{ini}$ et d'au moins l'un d'un vecteur $c$ de paramètres à partir d'un vecteur initial $c = c_{i,,i}$ et d'un vecteur $\alpha$ de paramètres à partir d'un vecteur initial $\alpha = \alpha_{ini}$, où le vecteur $c$ des paramètres rend compte du durcissement de faisceau du rayonnement dans la pièce et le vecteur $\alpha$ des paramètres caractérise la diffusion Compton du rayonnement dans la pièce, par minimisation de la somme des normes des différences au carré entre les N projections acquises et les N images calculées,

traitement des N projections et/ ou des N images calculées comprenant un premier traitement et/ ou un deuxième traitement,

le premier traitement comportant une correction du durcissement de faisceau sur les N projections à partir du vecteur $c$ ayant été estimé ou une génération du durcissement de faisceau sur les N images calculées à partir du vecteur $c$ ayant été estimé,

le deuxième traitement comportant une correction de la diffusion Compton sur les N projectionsà partir du vecteur $\alpha$ ayant été estimé ou une génération de la diffusion Compton sur les N images calculées à partir du vecteur $\alpha$ ayant été estimé,

identification de défauts de la pièce par comparaison des N projections traitées aux N images calculées traitées.

Un troisième objet de l'invention est un dispositif de contrôle non destructif d'une pièce par radiographie en transmission, comportant :

un dispositif de radiographie en transmission, pour l'acquisition de N projections de la pièce selon N angles de vue différents et prédéterminés de la pièce, où N est un entier naturel prescrit,
un calculateur configuré pour effectuer les étapes suivantes :

génération de N images calculées de la pièce à partir d'un modèle de référence de la pièce correspondant aux N angles de vue et à partir d'un vecteur $p$ de paramètres caractérisant la géométrie de projection de l'acquisition pour les N angles de vue à chacune de plusieurs itérations successives,

estimation, par les itérations successives, du vecteur $p$ à partir d'un vecteur initial $p = p_{ini}$ et d'au moins l'un d'un vecteur $c$ de paramètres à partir d'un vecteur initial $c = c_{ini}$ et d'un vecteur $\alpha$ de paramètres à partir d'un vecteur initial $\alpha = \alpha_{ini}$, où le vecteur $c$ des paramètres rend compte du durcissement de faisceau du rayonnement dans la pièce et le vecteur $\alpha$ des paramètres caractérise la diffusion Compton du rayonnement dans la pièce, par minimisation de la somme des normes des différences au carré entre les N projections acquises et les N images calculées,

traitement des N projections et/ ou des N images calculées comprenant un premier traitement et/ ou un deuxième traitement,

le premier traitement comportant une correction du durcissement de faisceau sur les N projections à partir du vecteur $c$ ayant été estimé ou une génération du durcissement de faisceau sur les N images calculées à partir du vecteur $c$ ayant été estimé,
le deuxième traitement comportant une correction de la diffusion Compton sur les N projectionsà partir du vecteur $\alpha$ ayant été estimé ou une génération de la diffusion Compton sur les N images calculées à partir du vecteur $\alpha$ ayant été estimé,
identification de défauts de la pièce par comparaison des N projections traitées aux N images calculées traitées.

L'invention sera mieux comprise à la lecture de la description qui va suivre, donnée uniquement à titre d'exemple non limitatif en référence aux figures ci-dessous des dessins annexés.

[Fig. 1] représente schématiquement un synoptique modulaire d'un dispositif de contrôle non destructif d'une pièce par radiographie aux rayons X suivant un mode de réalisation de l' invention.

[Fig. 2] représente schématiquement un synoptique modulaire d'un dispositif de contrôle non destructif d'une pièce par radiographie aux rayons X suivant un mode de réalisation de l'invention.

[Fig. 3] représente schématiquement un synoptique modulaire d'un dispositif de contrôle non destructif d'une pièce par radiographie aux rayons X suivant un mode de réalisation de l'invention.

[Fig. 4] représente schématiquement un synoptique modulaire d'un dispositif de contrôle non destructif d'une pièce par radiographie aux rayons X suivant un mode de réalisation de l'invention.

[Fig. 5] représente schématiquement un organigramme d'un procédé de contrôle non destructif d'une pièce par radiographie aux rayons X suivant un mode de réalisation de l'invention.

[Fig. 6] représente schématiquement une courbe de l'intensité des pixels d'une projection $P(x)$ dans le cas idéal et dans un cas pratique altéré par des artéfacts de durcissement de faisceau d'une projection obtenue par un dispositif de l'état de la technique.

[Fig. 7] représente un schéma explicatif de la diffusion Compton lors de l'acquisition d'une projection aux rayons X.

[Fig. 8] représente la différence entre, d'une part l'inverse de l'exponentielle de l'intensité d'une projection acquise, et d'autre part l'inverse de l'exponentielle de l'intensité d'une projection simulée, avant correction sur une partie d'une pale d'aube de turbine de turbomachine, obtenue par un dispositif de l'état de la technique.

[Fig. 9] représente la différence entre, d'une part l'inverse de l'exponentielle de l'intensité d'une projection acquise, et d'autre part l'inverse de l'exponentielle de l'intensité d'une projection simulée, avant correction sur une partie d'un pied d'aube de turbine de turbomachine, obtenue par un dispositif de l'état de la technique.

[Fig. 10] représente la différence entre, d'une part l'inverse de l'exponentielle de l'intensité d'une projection acquise, et d'autre part l'inverse de l'exponentielle de l'intensité d'une projection simulée, après correction sur une partie de la même pale d'aube de turbine de turbomachine qu'à la figure 8, obtenue par le procédé, un dispositif et un programme d'ordinateur pour le contrôle non destructif d'une pièce par radiographie aux rayons X suivant un mode de réalisation de l'invention.

[Fig. 11] représente la différence entre, d'une part l'inverse de l'exponentielle de l'intensité d'une projection acquise, et d'autre part l'inverse de l'exponentielle de l'intensité d'une projection simulée, après correction sur une partie du même pied d'aube de turbine de turbomachine qu'à la figure 9, obtenue par le procédé, un dispositif et un programme d'ordinateur pour le contrôle non destructif d'une pièce par radiographie aux rayons X suivant un mode de réalisation de l'invention.

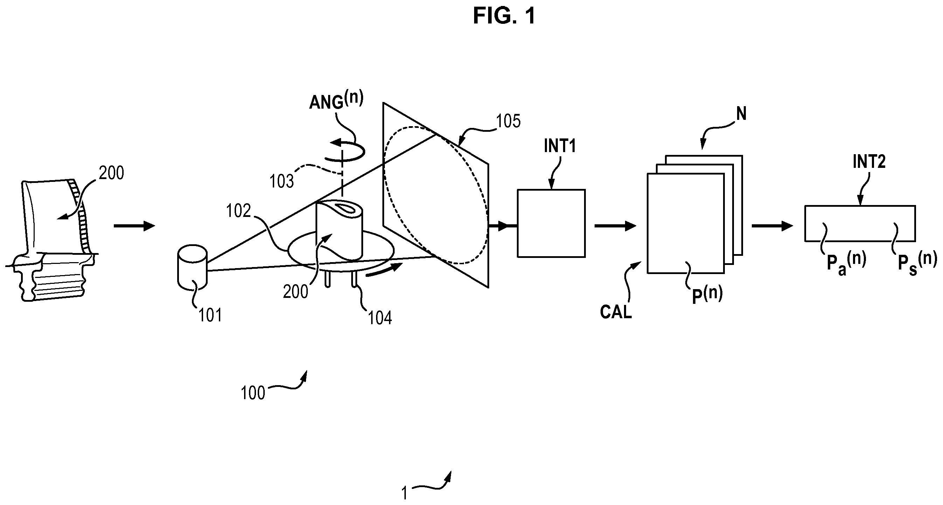

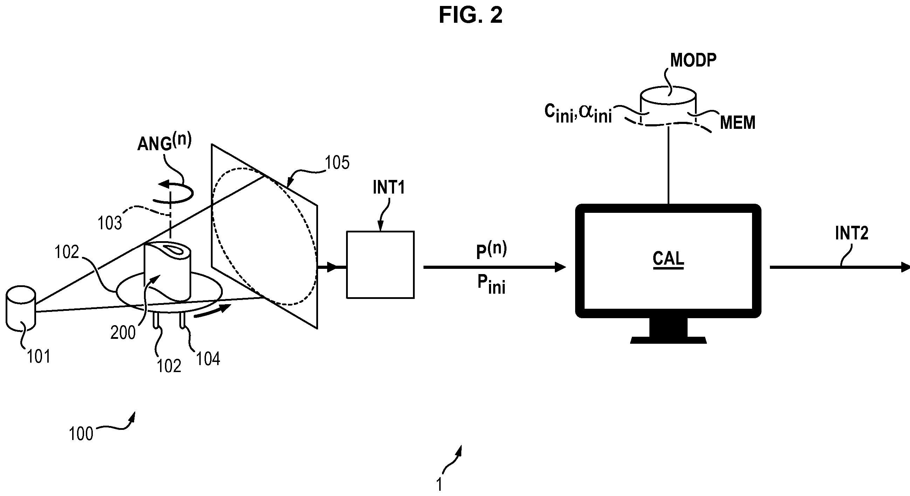

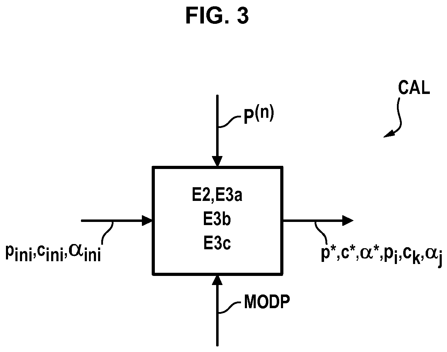

Ainsi qu'illustré aux figures 1 à 5, le dispositif 1 de contrôle non destructif d'une pièce réelle 200 comporte un dispositif 100 de radiographie en transmission permettant d'acquérir, au cours de l'étape E1 du procédé, des projections $P^{(n)}$, également appelées projections acquises brutes, de la pièce 200. Dans ce qui suit, le rayonnement est des rayons X Le dispositif 100 de radiographie permet d'inspecter la pièce 200 dans des conditions d'acquisition maîtrisée avec une géométrie d'acquisition connue et permet d'imager en transmission la structure interne de la pièce 200. Dans ce qui suit, les projections $P^{(n)}$ et les images mentionnées ci-dessous sont définies par leurs niveaux de gris (ou intensité) pour leurs différents pixels x.

Dans les modes de réalisation décrits ci-dessous, les projections $P^{(n)}$ sont des images $P^{(n)}$ radiographiques en transmission de rayons X, dans le procédé de contrôle non destructif d'une pièce par radiographie aux rayons X, le dispositif 1 de contrôle non destructif d'une pièce par radiographie aux rayons X et le programme d'ordinateur de contrôle non destructif d'une pièce par radiographie aux rayons X.

La pièce 200 est une pièce mécanique, et peut être d'une manière non limitative une pièce aéronautique, notamment une aube de turbomachine (par exemple de turboréacteur), par exemple une de leurs aubes de turbine (pale de turbine), ou peut-être autre. La pièce 200 est en un matériau semi-transparent au rayonnement, ici aux rayons X, et peut être constituée en un seul matériau (mono-matériau). La pièce 200 peut être une pièce métallique ou une pièce composite à matrice céramique, ou autre. Le procédé, le dispositif 1 et le programme d'ordinateur pour le contrôle non destructif de la pièce 200 par radiographie aux rayons X sont employés pour contrôler la pièce 200 au cours de sa fabrication ou lors d'opérations de maintenance, afin de détecter des défauts de cette pièce, pouvant par exemple provoquer une défaillance en vol dans le cas d'une pièce aéronautique.

Le dispositif 1 de contrôle non destructif de la pièce 200 comporte et le procédé de dispositif de contrôle non destructif de la pièce 200 utilise un (ou plusieurs) calculateur CAL. Le calculateur CAL peut être ou comprendre un ou plusieurs ordinateurs, un ou plusieurs serveurs, une ou plusieurs machines, un ou plusieurs processeurs, un ou plusieurs microprocesseurs, une ou plusieurs mémoires permanentes MEM, une ou plusieurs mémoires vives MEM. Le calculateur CAL peut comprendre une ou plusieurs interfaces physiques INT1 d'entrée de données, une ou plusieurs interfaces physiques INT2 de sortie de données. Cette ou ces interfaces physiques INT1 d'entrée de données peuvent être ou comprendre un ou plusieurs claviers d'ordinateur, un ou plusieurs ports physiques de communication de données, un ou plusieurs écrans tactiles, ou autres. Cette ou ces interfaces physiques INT2 de sortie de données peuvent être ou comprendre un ou plusieurs ports physiques de communication de données, un ou plusieurs écrans, ou autres. Un programme d'ordinateur peut être enregistré et exécuté sur le calculateur CAL du dispositif 1 de contrôle non destructif de la pièce 200 et comporter des instructions de code, qui lorsqu'elles sont exécutées sur celui-ci, mettent en œuvre tout ou partie du procédé de contrôle non destructif de la pièce 200 suivant l'invention (dont la réception des N projections au cours de l'étape E1).

Le dispositif 100 de radiographie aux rayons X comporte une source 101 de rayons X, un support 102 sur lequel se trouve la pièce 200, un mécanisme 104 de contrôle pour faire tourner le support 102 et la source 101 l'un par rapport à l'autre 101 autour d'un axe 103 de rotation, pouvant être par exemple vertical (par exemple la source 101 est fixe et le support 102 est mis en rotation autour de l'axe 103), un détecteur 105 des rayons X traversant la pièce 200, la pièce 200 se trouvant donc sur le trajet des rayons X entre la source 101 et le détecteur 105. La source 101, le support 102 et le détecteur 105 sont disposés dans une cabine à rayons X de haute puissance. Le détecteur 105 fournit les projections $P^{(n)}$ de la pièce 200 au cours de la première étape E1. Le mécanisme 104 de contrôle est contrôlé pour l'acquisition aux N angles $ANG^{(n)}$ de vue, différents les uns des autres, de la pièce 200 vis-à-vis des rayons X, par le détecteur 105, de N projections $P^{(n)}$. N est un entier naturel prescrit, supérieur ou égal à 1. L'entier naturel n va de 1 à N et désigne le numéro de l'angle $ANG^{(n)}$ de vue respectif et donc le numéro de la projection $P^{(n)}$ acquise. Le dispositif 100 de radiographie permet ainsi d'acquérir N projections (c'est-à-dire N projections $P^{(n)}$) du volume de la pièce 200 sous respectivement les N angles $ANG^{(n)}$ de vue. Les N angles $ANG^{(n)}$ de vue ont été prédétermines pour être utilisés pour l'étape ultérieure E5 d'analyse de la pièce. L'important temps d'acquisition des projections acquises par rayons X conduit à ne considérer qu'un nombre limité N de projections $P^{(n)}$ acquises, inférieur à 1000 voire à 100, ou autre. Le dispositif 100 de radiographie aux rayons X fournit ainsi l'ensemble des projections $P^{(n)}$ acquises au cours de l'étape E1.

Au cours d'une deuxième étape E2, postérieure à la première étape E1, le calculateur CAL génère N images $\hat{P}^{(n)}$ calculées de la pièce 200 à partir d'un modèle MODP numérique de référence de la pièce 200, ainsi qu'illustré aux figures 1 à 5. Ces N images $\hat{P}^{(n)}$ calculées correspondent aux N angles $ANG^{(n)}$ de vue, c'est-à-dire adoptent le même angle $ANG^{(n)}$ de vue que respectivement les N projections $P^{(n)}$. Ce modèle MODP est une référence géométrique de la pièce 200, est enregistré à l'avance dans une mémoire du calculateur CAL et peut être par exemple un modèle de conception assistée par ordinateur (ou CAO en abréviation) de la pièce 200, reproduisant une pièce 200 idéale sans défauts, ayant une forme extérieure de coordonnées tridimensionnelles définies. Ce modèle MODP peut tenir compte de la composition du matériau de la pièce 200. A chaque étape E2, le calculateur CAL génère N images $\hat{P}^{(n)}$ calculées de la pièce 200 à partir du modèle MODP de référence de la pièce 200 correspondant aux N angles $ANG^{(n)}$ de vue et à partir d'un vecteur $p$ de paramètres $p_i$ caractérisant la géométrie de projection de l'acquisition pour les N angles $ANG^{(n)}$ de vue à chacune de plusieurs itérations successives.

Le calculateur CAL effectue une ou plusieurs ou toutes les étapes E3a, E3b, E3c d'estimation d'artefacts de projections acquises multi-vues, qui seront décrites ci-dessous. Suivant des modes de réalisation, la détermination des paramètres décrits ci-dessous se fait par une procédure d'optimisation qui exploite des champs de sensibilité pour minimiser des résidus de projection.

Au cours de la troisième étape E3a, postérieure à la première étape E1, le calculateur CAL estime le vecteur $p$ des paramètres $p_i$ de la géométrie de projection de l'acquisition de l'étape E1 pour les N angles $ANG^{(n)}$ de vue, par minimisation de la somme des normes quadratiques des différences au carré, calculée par le calculateur CAL, entre les N projections $P^{(n)}$ acquises et les N images $\hat{P}^{(n)}$ calculées. Au cours de la troisième étape E3a le calculateur CAL estime le vecteur $p$ décrivant la géométrie du dispositif 100 de radiographie par rayons X par rapport au modèle MODP de la pièce 200 idéale (par exemple son modèle de CAO). La troisième étape E3a permet de déterminer précisément par le calculateur CAL le vecteur $p$ de la géométrie de projection utilisée lors de l'acquisition des projections $P^{(n)}$ par le dispositif 100 de radiographie par rayons X. Cela permet d'assurer une simulation plus fiable des images. La troisième étape E3a permet d'effectuer lors de l'itération suivante de l'étape E2 un recalage géométrique des N images $\hat{P}^{(n)}$ calculées pour les N angles $ANG^{(n)}$ de vue en calculant les N images $\hat{P}^{(n)}$ calculées par projection du modèle MODP sur le plan du détecteur 105 selon la géométrie déterminée par le vecteur $p$ des N projections $P^{(n)}$ acquises. L'étape E3a peut être mise en œuvre par un simulateur SIMX, ainsi que reorésenté à la fiaure 4. Au cours de la troisième étaoe E3a. le calculateur CAL estime le vecteur $p$ des paramètres $p_i$ de la géométrie de projection de l'acquisition par les itérations successives à partir d'un

vecteur initial $p = p_{ini}$.

Le vecteur $p$ des paramètres de la géométrie de projection est utilisé pour simuler les images calculées $\hat{P}^{(n)}$. Ainsi, lors de l'étape E2, on utilise déjà le vecteur $p_{ini}$ des paramètres des valeurs initiales prescrites des paramètres de la géométrie de projection lors de la première itération ; puis on utilise lors des itérationssuivantes de l'étape E2 les valeurs estimées du vecteur $p$. Les images calculées $\hat{P}^{(n)}$ sont par la suite utilisées pour estimer le vecteur $c$ et/ou $\alpha$ dans l'étape E3a et l'étape E3b et/ou E3c. Les images calculées $\hat{P}^{(n)}$ ne sont pas corrigées uniquement à l'étape E4, mais également à l'étape E2. Ainsi, l'étape E2 inclut la régénération de l'image calculée $\hat{P}^{(n)}$ à chaque nouvelle itération avec le nouveau vecteur $p^*$, qui a été estimé lors de l'étape E3a. L'estimation du vecteur $p$ lors de l'étape E3a est une procédure itérative, et donc à chaque itération on utilise la meilleure estimation possible (jusqu'à convergence) pour générer les images calculées $\hat{P}^{(n)}$. Le vecteur $p$ est utilisé à l'étape E2 et à chacune des itérations de l'étape E3a.

La reproduction ou correction des artéfacts repose sur la simulation numérique des projections $P^{(n)}$ acquises par un système rayons X. Les artéfacts sont ensuite estimés en se basant sur une modélisation paramétrique (étapes E3b, E3c) avant d'être soit reproduits (étape E4), soit corrigés (étape E4).

Les paramètres $p_i$ de projection (tels les angles $ANG^{(n)}$ de projection, distance de la source 101 au détecteur 105) permettent de lier le modèle MODP idéal de la pièce 200 aux projections acquises $P^{(n)}$ de la pièce 200 et sont ainsi des paramètres de mise en correspondance (en anglais : registration parameters) du modèle MODP idéal de la pièce 200 avec les projections acquises $P^{(n)}$.

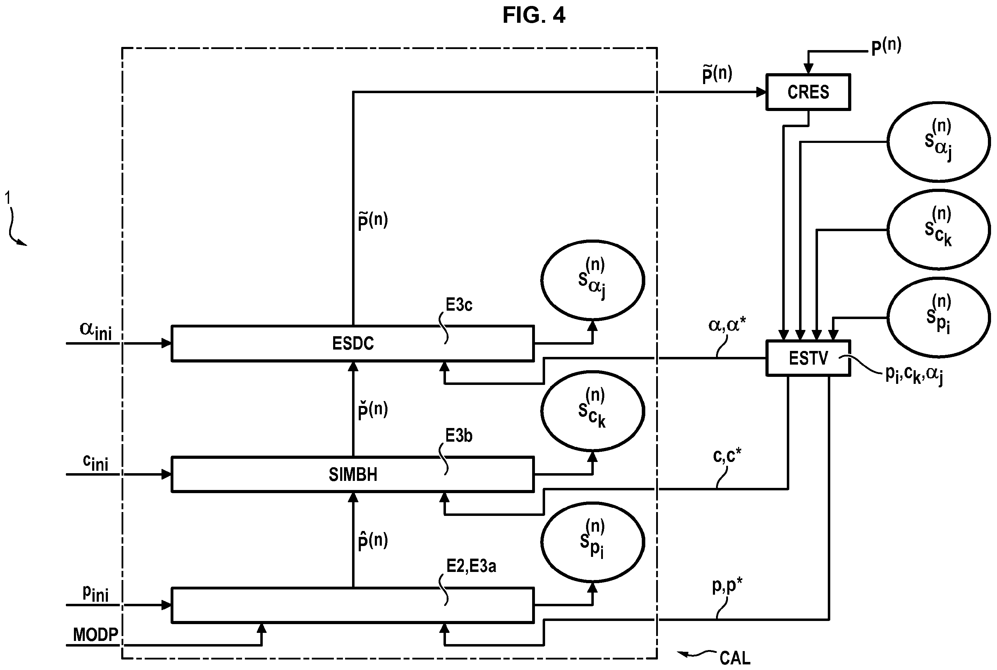

Suivant un mode de réalisation de l'invention, au coursde l'étape E3a, le calculateur CAL calcule (par exemple par le calculateur CRESde résidus à la figure 4) à chaque itération les résidus $\rho_p^{(n)}$ de projection, ces résidus étant les différences entre les projections observées $P^{(n)}$ et les projections simulées $\hat{P}^{(n)}$ selon l'équation $\rho_p^{(n)} = P^{(n)} - \hat{P}^{(n)}$. A partir de la première approximation prescrite, notée $p_{ini}$, de ces paramètres $p_i$, le calculateur CAL estime (par exemple par l'estimateur ESTV à la figure 4) le vecteur $p^*$ décrivant au mieux le système observé, c'est-à-dire minimisant les résidus $\rho_p^{(n)}$ de projection. Les champs de sensibilité $s_{p_i}^{(n)}$ sont calculés (par exemple par différences finies, ou autre) par le calculateur CAL selon l'équation suivante :

$$s_{p_i}^{(n)} = \left.\frac{\partial \hat{P}^{(n)}}{\partial p_i}\right|_{p}$$

et traduisent l'effet de la variation de chacun des paramètres $p_i$ sur l'image calculée. Les paramètres $p_i$ de la géométrie de projection sont calculés par le calculateur CAL par optimisation à partir des résidus de projection $\rho_p^{(n)}$, de la valeur $p_{ini}$, et des champs de sensibilité $s_{p_i}^{(n)}$. Le calculateur CAL calcule la variation $\delta p^*$ optimale du vecteur $p$ de paramètres et met à jour le vecteur $p$ selon l'équation suivante :

$$p^* = p + \delta p^*$$

où $p^*$ est le vecteur colonne des paramètres $p_i$ de la géométrie de projection mis à jour, $\delta p^*$ est le vecteur colonne de variation des paramètres $p_i$ de la géométrie de projection et est calculé par le calculateur CAL comme le $\delta p$ minimisant la somme des normes des différences au carré entre les résidus de projection $\rho_p^{(n)}$ et le produit de $\delta p$ par $s_p^{(n)}$ pour $n$ allant de 1 à N,

$$\delta p^* = \arg\min_{\delta p} \sum_{(n)} \left\| \rho_p^{(n)} - s_p^{(n)} \delta p \right\|^2$$

où $\delta p$ est un vecteur colonne, $s_p^{(n)}$ est la matrice des champs $s_{p_i}^{(n)}$ de sensibilité.

Le nombre de lignes de la matrice $\mathbf{s}_p^{(n)}$ est le nombre de pixels exploités dans les projections $P^{(n)}$, dans les images calculées $\hat{P}^{(n)}$ et dans le résidu $\rho_p^{(n)}$. Le nombre de colonnes de la matrice $\mathbf{s}_p^{(n)}$ est le nombre de paramètres $p_i$.

Le calculateur CAL calcule lors de l'étape E3a l'ensemble des champs de sensibilité $s_{p_i}^{(n)}$ pour $n$ allant de 1 à N et $i$ allant de 1 à $K_1$.

L'estimation du vecteur $p$ des paramètres $p_i$ de la géométrie de projection pour les N angles $ANG^{(n)}$ de vue par le calculateur CAL est effectuée par itérations successives sur $p$ qui devient $p_{ini}$ , pour :

- calculer à chaque itération actuelle, à partir du vecteur $p$ de l'itération précédente prenant la place du vecteur $p_{ini}$ mentionné ci-dessus les champs $s_{p_i}^{(n)}$ de sensibilité selon l'équation mentionnée ci-dessus,
- pour chaque itération actuelle : calculer un nouveau $\delta p^*$ et mettre à jour $p$ selon $p^* = p + \delta p'$, avec $\delta p^*$ calculé comme le $\delta p$ minimisant la somme des normes des différences au carré entre les résidus de projection $\rho_p^{(n)}$ et le produit de $\delta p$ par $\mathbf{s}_p^{(n)}$ pour $n$ allant de 1 à N, selon

$$\delta p^* = \arg\min_{\delta p} \sum_{(n)} \left\| \rho_p^{(n)} - \mathbf{s}_p^{(n)} \, \delta p \right\|^2$$

- jusqu'à ce que $p$ converge vers une meillleure estimation (déterminée par exemple par le fait que la norme de la différence calculée entre le $p$ de l'itération actuelle et le $p$ de l'itération précédente devient inférieure à un seuil prescrit).

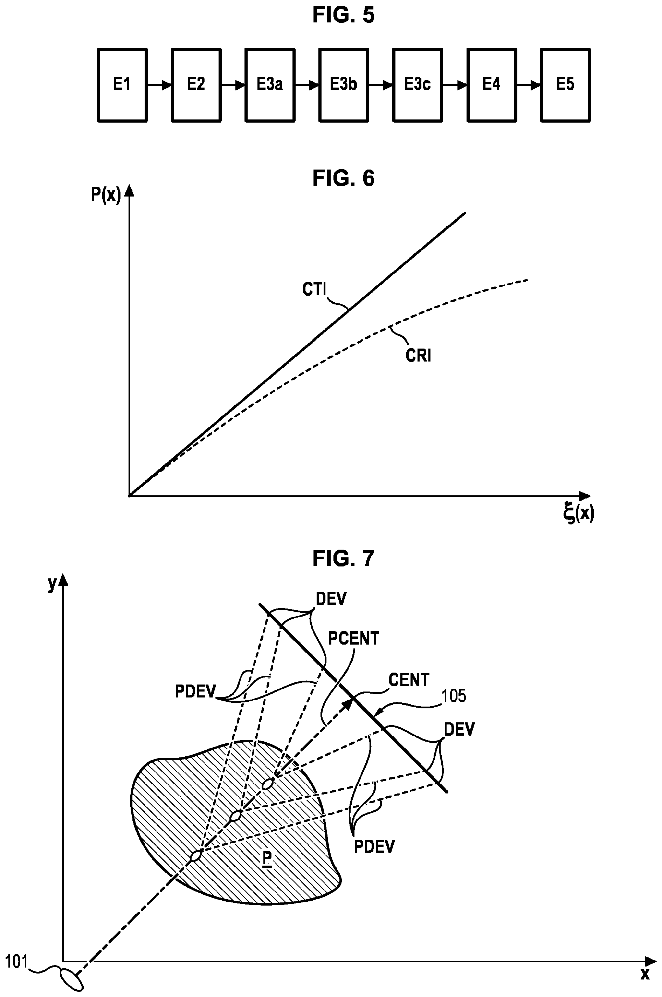

Au cours de la quatrième étape E3b, postérieure à la première étape E1, le calculateur CAL estime le vecteur $c$ des paramètres $c_k$ d'étalonnage de durcissement de faisceau de rayons X dans la pièce 200 par minimisation de la somme des normes des différences au carré entre les N projections $P^{(n)}$ acquises et les N images $\hat{P}^{(n)}$ calculées, calculée par le calculateur CAL. Le durcissement de faisceau se réfère au fait que l'absorption d'un photon par le matériau constituant la pièce analysée dépend de son énergie. Les photons de faible énergie sont absorbés préférentiellement comparés à ceux de haute énergie. De l'écart entre la courbe réelle CRI donnée par le niveau de gris $P(x)$ des pixels $x$ d'une projection $P^{(n)}$ mesurée et la courbe théorique CTI résultant de la modélisation utilisée dans les analyses des projections (loi de Beer-Lambert), illustrées à la figure 6, émerge desartéfacts dits de durcissement de faisceau. Le durcissement de faisceau induit une relation non linéaire entre l'intensité mesurée $P(x)$ d'une projection et l'épaisseur $\xi(x)$ de matière traversée (écart par rapport à la loi de Beer-Lambert) dans le cas d'une pièce mono-matériau. L'épaisseur $\xi(x)$ est l'épaisseur traversée par le rayon avant d'atteindre le pixel $x$. Dans le cas de pièces 200 mono-matériaux, les artéfacts de durcissement de faisceau peuvent être exactement corrigés par étalonnage de l'atténuation de durcissement de faisceau. Le calculateur CAL effectue une identification de la fonction d'étalonnage reliant l'atténuation effective des rayons X traversant la pièce 200 et la longueur de matériau traversée dans la pièce 200. L'étape E3b peut être mise en œuvre par un simulateur SMBH de durcissement de faisceau de rayons X, ainsi que représenté à la figure 4. Lors de l'étape E3b, le calculateur CAL estime, par les itérations successives, le vecteur $c$ à partir d'un vecteur initial $c = c_{ini}$.

On décrit ci-dessous des modes réalisation de la quatrième étape E3b. Ce qui est décrit ci-dessous est effectué à chacune des itérations de l'étape E3b.

Le calculateur CAL étalonne le durcissement de faisceau en identifiant la fonction u faisant passer de $\hat{P}^{(n)}(x)$ à $P^{(n)}(x)$, à savoir $p^{(n)}(x) = u(\hat{P}^{(n)}(x))$.

Suivant un mode de réalisation de l'invention, l'étalonnage du durcissement de faisceau est effectuée par l'application d'une fonction $u$ linéaire par morceau reliant $P^{(n)}(x)$ et $\hat{P}^{(n)}(x)$.

Suivant un mode de réalisation de l'invention, la fonction $u$ est discrétisée sur une base de fonctions de forme $\varphi_k(y)$ prescrites (par exemple par des éléments finis monodimensionnels, ou des fonctions spline, ou des fonctions polynômes, ou autres) :

$$u(y) = \sum_{k=1}^{K_3} c_k \, \varphi_k(y)$$

où $K_3$ est un entier naturel prescrit supérieur ou égal à 1, $k$ est un entier naturel allant de 1 à $K_3$, y est une variable muette désignant le niveau de gris (intensité) d'un pixel d'une image $\hat{P}^{(n)}$ de référence. Le vecteur colonne $c$ contenant les paramètres $c_k$ quantifie la fonction d'étalonnage de durcissement de faisceau de rayons X pour $k$ allant de 1 à $K_3$. A partir d'une estimation initiale prescrite $\boldsymbol{c_{ini}}$ de ces paramètres, le calculateur CAL calcule le vecteur $c^*$ décrivant au mieux l'effet observé.

Suivant un mode de réalisation de l'invention, le calculateur CAL calcule (par exemple par différences finies) les champs $s_{c_k}^{(n)}$ de sensibilité, associés à chaque degré de liberté $c_k$:

$$s_{c_k}^{(n)} = \left.\frac{\partial \breve{P}^{(n)}}{\partial c_k}\right|_{c}$$

à partir du vecteur $c = \boldsymbol{c_{ini}}$ des valeurs initiales prescrites des paramètres $c_k$ d'étalonnage de durcissement de faisceau de rayons X dans la pièce 200, avec $\breve{P}^{(n)}$ l'image simulée, obtenue en appliquant la fonction $u$ (avec les paramètres contenus dans le vecteur $c_{ini}$) à chacun des pixels de $\hat{P}^{(n)}$. Le vecteur $\boldsymbol{c_{ini}}$ des valeurs initiales est tel que $u(y) = y$. On a ainsi :

$$\breve{P}^{(n)}(\boldsymbol{x}) = \sum_{k=1}^{K_3} c_k \, \varphi_k\big(\hat{P}^{(n)}(\boldsymbol{x})\big)$$

Les champs $s_{c_k}^{(n)}$ de sensibilité traduisent l'effet de la variation de chacun des paramètres $c_k$ sur l'image calculée.

Suivant un mode de réalisation de l'invention, au coursde l'étape E3b, le calculateur CAL calcule (par exemple par le calculateur CRES de résidus à la figure 4) les résidus de projection $\rho_c^{(n)} = P^{(n)} - \breve{P}^{(n)}$, ces résidus étant les différences entre les projections observées $P^{(n)}$ et les projections simulées $\breve{P}^{(n)}$. A partir d'une première approximation prescrite $\boldsymbol{c_{ini}}$ du vecteur colonne $c$ de paramètres $c_k$, le calculateur CAL estime (par exemple par l'estimateur ESTV à la figure 4) le vecteur $\boldsymbol{c^*}$ décrivant au mieux le système observé, c'est-à-dire minimisant les résidus $\rho_c^{(n)}$ de projection. Le vecteur $\boldsymbol{c}$ est calculé par le calculateur CAL par optimisation à partir des résidus $\rho_c^{(n)}$ de projection, de la valeur $\boldsymbol{c_{ini}}$, et des champs $s_{c_k}^{(n)}$ de sensibilité. Le calculateur CAL calcule la variation $\delta\boldsymbol{c^*}$ optimale du vecteur $\boldsymbol{c}$ de paramètres et met à jour le vecteur $\boldsymbol{c}$ selon l'équation suivante :

$$c^* = c + \delta c^*$$

où $\boldsymbol{c^*}$ est le vecteur colonne des paramètres $c_k$ d'étalonnage de durcissement de faisceau de rayons X dans la pièce 200 mis à jour, $\delta\boldsymbol{c^*}$ est le vecteur colonne de variation des paramètres $c_k$ d'étalonnage de durcissement de faisceau de rayons X dans la pièce 200 et est calculé comme le $\delta\boldsymbol{c}$ minimisant la somme des normes des différences au carré entre les résidus de projection $\rho_c^{(n)}$ et le produit de $\delta\boldsymbol{c}$ par $s_c^{(n)}$ pour $n$ allant de 1 à N,

$$\delta c^* = \arg\min_{\delta c} \sum_{(n)} \left\| \rho_c^{(n)} - s_c^{(n)} \, \delta c \right\|^2$$

où $\delta\boldsymbol{c}$ est un vecteur colonne,

$\mathbf{s}_c^{(n)}$ est la matrice des champs $s_{c_k}^{(n)}$ de sensibilité.

Le nombre de lignes de la matrice $\mathbf{s}_c^{(n)}$ est le nombre de pixels exploités dans les projections $P^{(n)}$, dans les images calculées $\hat{P}^{(n)}$ et dans le résidu $\rho_c^{(n)}$. Le nombre de colonnes de la matrice $\mathbf{s}_c^{(n)}$ est le nombre de paramètres $c_k$.

Le calculateur CAL calcule lorsde l'étape E3b l'ensemble des champs $s_{c_k}^{(n)}$ de sensibilité pour $n$ allant de 1 à Net $k$ allant de 1 à $K_3$.

L'estimation du vecteur $\mathbf{c}$ des paramètres $c_k$ d'étalonnage de durcissement de faisceau par le calculateur CAL est effectuée par itérations successives sur $\mathbf{c}$ qui devient $\mathbf{c_{ini}}$, pour :

- calculer à chaque itération actuelle, à partir du vecteur $\mathbf{c}$ de l'itération précédente prenant la place du vecteur $\mathbf{c_{ini}}$ mentionné ci-dessus les champs $s_{c_k}^{(n)}$ de sensibilité selon l'équation mentionnée ci-dessus,
- pour chaque itération actuelle : calculer un nouveau $\delta\mathbf{c}^*$ et mettre à jour $\mathbf{c}$ selon $\mathbf{c}^* = \mathbf{c} + \delta\mathbf{c}^*$, avec $\delta\mathbf{c}^*$ calculé comme le $\delta\mathbf{c}$ minimisant la somme des normes des différences au carré entre les résidus de projection $\rho_c^{(n)}$ et le produit de $\delta\mathbf{c}$ par $\mathbf{s}_c^{(n)}$ pour $n$ allant de 1 à N, selon

$$\delta\boldsymbol{c}^* = \arg\min_{\delta\boldsymbol{c}} \sum_{(n)} \left\| \rho_c^{(n)} - \mathbf{s}_c^{(n)}\, \delta\boldsymbol{c} \right\|^2$$

- jusqu'à ce que $\mathbf{c}$ converge vers une meilleure estimation (déterminée par exemple par le fait que la norme de la différence calculée entre le $\mathbf{c}$ de l' itération actuelle et le $\mathbf{c}$ de l' itération précédente devient inférieure à un seuil prescrit).

Au cours de la cinquième étape E3c, postérieure à la première étape E1, le calculateur CAL estime le vecteur $\alpha$ des paramètres $\alpha_j$ de diffusion Compton des rayons X dans la pièce 200 par minimisation de la somme des normes des différences au carré, calculée par le calculateur CAL, entre les N projections $P^{(n)}$ acquises et les N images $\breve{P}^{(n)}$ simulées, ayant été calculés à partir des N images $\hat{P}^{(n)}$ calculées. Les paramètres $\alpha_j$ de diffusion Compton représente l'effet de la diffusion Compton sur les projections $P^{(n)}$ acquises. Ainsi qu'illustré à la figure 7, la diffusion Compton consiste en l'interaction d'un photon du rayon X avec un électron libre (ou faiblement rattaché à son atome) de la pièce 200 inspectée, provoquant la déviation du photon de sa trajectoire initiale. En atteignant le détecteur 105, le photon ainsi diffusé et dévié PDEV induit une augmentation de l'intensité mesurée (appelée signal secondaire $P_{\text{sec}}^{(n)}$ dans ce qui suit) dans la zone DEV située autour du point d'impact direct et central CENT du rayon primaire PCENT, et une diminution de cette intensité (appelée signal primaire $P_{\text{prim}}^{(n)}$ dans ce qui suit) en ce point d'impact CENT, créant dans les projections un flou dégradant l'analyse métrologique. Au contraire des méthodes connues utilisant une correction directe de l'effet Compton par une opération de déconvolution qui est numériquement instable, rendant peu fiables ces radiographies retraitées, l'étape E3c prévoit de reproduire cet effet de diffusion Compton sur des images simulées, pour permettre leur comparaison avec les projections acquises. L'étape E3c peut être mise en œuvre par un estimateur ESDC de diffusion Compton, ainsi que représenté à la figure 4. Lors de l'étape E3c, le calculateur CAL estime, par les itérations successives, le vecteur $\alpha$ à partir d'un vecteur initial $\alpha = \alpha_{ini}$. Ce qui est décrit ci-dessous est effectué pour chaque itération de l'étape E3c.

Suivant un mode de réalisation de l'invention, chaque projection $P^{(n)}$ acquise est modélisée par le calculateur CAL comme étant la somme de deux composantes : le signal primaire $P_{\text{prim}}^{(n)}$ provenant des photons traversant l'objet sans diffusion Compton mais subissant l'absorption par les atomes constituant le matériau (effet photoélectrique); et le signal secondaire $P_{\text{sec}}^{(n)}$ qui correspond à la contribution des photons diffusés par diffusion Compton à partir de la pièce 200, selon l'équation suivante :

$$P^{(n)} = P^{(n)}_{\text{prim}} + P^{(n)}_{\text{sec}}$$

Le signal secondaire, ou diffusé, $P^{(n)}_{\text{sec}}$ est calculé par le calculateur CAL comme étant le résultat de la convolution du signal primaire $P^{(n)}_{\text{prim}}$ avec un noyau paramétrique $K$ :

$$P^{(n)} = P^{(n)}_{\text{prim}} + P^{(n)}_{\text{prim}} * \boldsymbol{K}$$

Le calculateur CAL calcule le noyau paramétrique $K$ comme étant une somme pondérée de gaussiennes bidimensionnelles $g_\sigma$ de largeurs différentes l'une de l'autre (écart-types $\sigma$ différents l'un de l'autre) :

$$\boldsymbol{K}(\boldsymbol{x}) = \sum_{j=1}^{\text{K}_2} \alpha_j \left( g_{\sigma_j}(\boldsymbol{x}) - \delta(\boldsymbol{x}) \right)$$

où $\text{K}_2$ est un entier naturel prescrit supérieur ou égal à 1, $j$ est un entier naturel allant de 1 à $\text{K}_2$, $g_\sigma$ un noyau gaussien bidimensionnel d'écart-type $\sigma$ prescrit (suivant une suite $\sigma j$), $\delta(x)$ est la fonction de Dirac au pixel $x$.
En variante, les paramètres $\alpha_j$ du noyau gaussien $g_{\sigma j}$, peuvent être identifiés expérimentalement ou via des simulations de Monte-Carlo.

Suivant un mode de réalisation de l'invention, en identifiant le signal primaire $P^{(n)}_{\text{prim}}$ aux images simulées numériquement $\breve{P}^{(n)}$, le calculateur CAL calcule le vecteur $\alpha *$ qui approxime au mieux la diffusion Compton observée. $\alpha *$ est le vecteur colonne des paramètres $\alpha_j$ de diffusion Compton des rayons X dans la pièce 200, pour $j$ allant de 1 à $\text{K}_2$.
A partir d'un vecteur $\boldsymbol{\alpha_{ini}}$ des valeurs initiales prescrites des paramètres $\alpha_j$ de diffusion Compton des rayons X dans la pièce 200, le calculateur CAL calcule des images $\tilde{P}^{(n)} = \breve{P}^{(n)} + \breve{P}^{(n)} * \boldsymbol{K}$ à partir des images $\breve{P}^{(n)}$ simulées, obtenues à partir des N images calculées $\hat{P}^{(n)}$, selon l'équation :

$$\tilde{P}^{(n)} = \breve{P}^{(n)} + \breve{P}^{(n)} * \boldsymbol{K}$$

où le signal diffusé $\breve{P}^{(n)} * \boldsymbol{K}$ est simulé et ajouté aux images $\breve{P}^{(n)}$ de sorte à générer les images $\tilde{P}^{(n)}$. Le calculateur CAL calcule ainsi l'ensemble des N images $\breve{P}^{(n)}$ au cours de l'étape E3c.

Suivant un mode de réalisation de l'invention, $\breve{P}^{(n)}(\boldsymbol{x}) = u(\hat{P}^{(n)}(\boldsymbol{x}))$ est l'image obtenue en appliquant la fonction $u$ à l'intensité (niveau de gris) de chacun des pixels $x$ de l'image calculée $\hat{P}^{(n)}$. Bien entendu, les images simulées $\breve{P}^{(n)}$ peuvent être obtenues d'une autre manière à partir des N images calculées , dans le cas où l'étape E3c est mise en œuvre sans l'étape E3b.
Le vecteur $\alpha_{ini}$ des valeurs initiales prescrites des paramètres $\alpha_j$ de diffusion Compton valeurs initiales $\alpha = \alpha_{ini}$ est tel que $\tilde{P}^{(n)} = \breve{P}^{(n)}$ pour $\alpha_{ini}$.
Suivant un mode de réalisation de l'invention, au cours de l'étape E3c, le calculateur CAL calcule (par exemple par le calculateur CRES de résidus à la figure 4) les résidus $\rho^{(n)}_\alpha$ de projection, ces résidus $\rho^{(n)}_\alpha$ de projection étant les différences entre les projections acquises $P^{(n)}$ et les projections simulées $\tilde{P}^{(n)}$ selon l'équation :

$$\rho^{(n)}_\alpha = P^{(n)} - \tilde{P}^{(n)}$$

A partir de la première approximation prescrite du vecteur $\alpha$ de paramètres, notée $\alpha_{ini}$, le calculateur CAL estime (par exemple par l'estimateur ESTV à la figure 4) le vecteur $\alpha *$ décrivant au mieux le système observé, c'est-à-dire

minimisant les résidus $\rho_\alpha^{(n)}$ de projection.

Suivant un mode de réalisation de l'invention, le calculateur CAL calcule (par exemple par différences finies) les champs $s_{\alpha_j}^{(n)}$ de sensibilité, associés à chaque degré de liberté $\alpha_j$:

$$s_{\alpha_j}^{(n)} = \left.\frac{\partial \tilde{P}^{(n)}}{\partial \alpha_j}\right|_\alpha$$

à partir du vecteur colonne $\alpha_{ini}$ des valeurs initiales prescrites des paramètres $\alpha_j$ de diffusion Compton des rayons X dans la pièce 200. Les paramètres $\alpha_j$ de diffusion Compton des rayons X dans la pièce 200 sont calculés par le calculateur CAL par optimisation à partir des résidus $\rho_{\alpha_{ini}}^{(n)}$ de projection, de la valeur $\alpha_{ini}$, et des champs $s_{\alpha_j}^{(n)}$ de sensibilité. Le calculateur CAL calcule la variation $\delta\alpha^*$ optimale du vecteur $\alpha$ de paramètres et met à jour le vecteur $\alpha$ selon l'équation suivante :

$$\alpha^* = \alpha + \delta\alpha^*$$

où $\delta\alpha^*$ est le vecteur colonne de variation au moins des paramètres $\alpha_j$ de diffusion Compton des rayons X dans la pièce 200 et est calculé comme le $\delta\alpha$ minimisant la somme des normes des différences au carré entre les résidus de projection $\rho_\alpha^{(n)}$ et le produit de $\delta\alpha$ par $\mathbf{s}_\alpha^{(n)}$ pour $n$ allant de 1 à N,

$$\delta\boldsymbol{\alpha}^* = \arg\min_{\delta\boldsymbol{\alpha}} \sum_{(n)} \left\| \rho_\alpha^{(n)} - \mathbf{s}_\alpha^{(n)} \delta\boldsymbol{\alpha} \right\|^2$$

où $\delta\alpha$ est un vecteur colonne,

$\mathbf{s}_\alpha^{(n)}$ est la matrice au *moins des champs* $s_{\alpha_j}^{(n)}$ de sensibilité.

Le nombre de lignes de la matrice $\mathbf{s}_\alpha^{(n)}$ est le nombre de pixels exploités dans les projections $P^{(n)}$, dans les images calculées $\hat{P}^{(n)}$ et dans le résidu $\rho_\alpha^{(n)}$. Le nombre de colonnes de la matrice $\mathbf{s}_\alpha^{(n)}$ est le nombre de paramètres $\alpha_j$.

Le calculateur CAL calcule lors de l'étape E3c l'ensemble des champss $s_{\alpha_j}^{(n)}$ de sensibilité pour $n$ allant de 1 à N et $j$ allant de 1 à $K_1$.

L'estimation du vecteur $\alpha$ des paramètres $\alpha_j$ de diffusion Compton des rayons X par le calculateur CAL est effectuée par itérations successives sur $\alpha$ qui devient $\alpha_{ini}$, pour :

- calculer à chaque itération actuelle, à partir du vecteur $\alpha$ de l'itération précédente prenant la place du vecteur $\alpha_{ini}$ mentionné ci-dessus les champs $s_{\alpha_j}^{(n)}$ de sensibilité selon l'équation mentionnée ci-dessus,

- pour chaque itération actuelle : calculer un nouveau $\delta\alpha^*$ et mettre à jour $\alpha$ selon $\alpha^* = \alpha + \delta\alpha^*$, avec $\delta\alpha^*$ calculé comme le $\delta\alpha$ minimisant la somme des normes des différences au carré entre les résidus de projection $\rho_\alpha^{(n)}$ et le produit de $\delta\alpha$ par $\mathbf{s}_\alpha^{(n)}$ pour $n$ allant de 1 à N, selon

$$\boldsymbol{\delta\alpha^*} = \arg\min_{\boldsymbol{\delta\alpha}} \sum_{(n)} \left\| \rho_\alpha^{(n)} - \mathbf{s}_\alpha^{(n)} \, \boldsymbol{\delta\alpha} \right\|^2$$

- jusqu'à ce que $\alpha$ converge vers une meillleure estimation (déterminée par exemple par le fait que la norme de la différence calculée entre le $\alpha$ de l'itération actuelle et le $\alpha$ de l'itération précédente devient inférieure à un seuil prescrit).

Suivant un mode de réalisation de l'invention, N est inférieur ou égal à 1000 ou à 100 ou à 50 ou à 10. Cela traduit le faible nombre de projections acquises $P^{(n)}$ malgré lequel l'invention est capable de fonctionner. Ce nombre est inférieur aux nombres de projections acquises nécessaires dans l'état de la technique pour la reconstruction tomographique de la pièce 200.

Au cours de la septième étape E4, postérieure aux itérations de l'étape E3a et de l'étape E3b et/ou E3c, le calculateur CAL traite les N projections $P^{(n)}$ obtenues à l'étape E1 et/ou les N images $\hat{P}^{(n)}$ calculées, ayant été obtenues après les itérations de l'étape E2. Le calculateur CAL effectue un premier traitement et/ou un deuxième traitement.

Le premier traitement comporte une correction du durcissement de faisceau sur les N projections $P^{(n)}$ à partir du vecteur $c$ ayant été estimé ou une génération du durcissement de faisceau sur les N images $\hat{P}^{(n)}$ calculées à partir du vecteur $c$ ayant été estimé.

Le deuxième traitement comporte une correction de la diffusion Compton sur les N projections $P^{(n)}$ à partir du vecteur $\alpha$ ayant été estimé ou une génération de la diffusion Compton sur les N images $\hat{P}^{(n)}$ calculées à partir du vecteur $\alpha$ ayant été estimé.

Le calculateur obtient ainsi N projections acquises $P_a^{(n)}$, qui sont égales à ou corrigées à partir des N projections acquises $P^{(n)}$ de la pièce 200, et N images simulées $P_s^{(n)}$, qui sont égales à ou générées à partir des N images $\hat{P}^{(n)}$ calculées de la pièce 200, ces projections acquises $P_a^{(n)}$ étant directement comparables aux N images simulées $P_s^{(n)}$, pour pouvoir ensuite effectuer l'analyse de la pièce 200 lors de l'étape E5.

Par exemple, le calculateur CAL génère d'abord lors de l'étape E2 les N images $\hat{P}^{(n)}$ calculées en leur appliquant le recalage géométrique pour les N angles $ANG^{(n)}$ de vue, et ce en utilisant les paramètres $p_j$ de projection pour simuler les N images $\hat{P}^{(n)}$ calculées. Ce sont ces images $\hat{P}^{(n)}$ calculées ainsi modifiées (recalées) qui sont utilisées comme images $\hat{P}^{(n)}$ calculées dans les traitements ci-dessous. Cette modification par recalage utilisant les paramètres $p_j$ de projection est effectuée au préalable sur les N images $\hat{P}^{(n)}$ calculées dans les premier et deuxième modes de réalisation de l'étape E4, décrits ci-dessous.

Suivant un premier mode de réalisation de l'étape E4, le calculateur CAL corrige les projections acquises $P^{(n)}$ en leur appliquant l'inverse de la fonction $u$ dépendant des paramètres $c_k$ d'étalonnage de durcissement de faisceau de rayons X à chacun des pixels de $P^{(n)}$ (pour effectuer ainsi une correction du durcissement de faisceau), pour obtenir les N projections $P_a^{(n)}$ acquises corrigées selon l'équation suivante :

$$P_a^{(n)} = u^{-1}\left(P^{(n)}\right)$$

Le calculateur CAL calcule la fonction $u$ dépendant des paramètres $c_k$ d'étalonnage de durcissement de faisceau de rayons X selon l'équation suivante :

$$u(y) = \sum_{k=1}^{K_3} c_k^* \varphi_k(y)$$

où $c_k^*$ désigne les paramètres $c_k$ d'étalonnage de durcissement de faisceau de rayons X, contenus dans le vecteur c* et ayant été calculés.

Le calculateur CAL traite les N images $\hat{P}^{(n)}$ calculées en les convoluant avec le noyau $\delta + K$ ayant été calculé en fonction des paramètres $\alpha_j$ de diffusion Compton (reproduction de la diffusion Compton sur les N images $\hat{P}^{(n)}$ calculées), pour obtenir les N images simulées $P_s^{(n)}$ selon les équations suivantes :

$$P_s^{(n)} = \hat{P}^{(n)} * (\delta + \boldsymbol{K})$$

$$\boldsymbol{K} = \sum_{j=1}^{\mathrm{K}_2} \alpha_j^* \left( g_{\sigma_j} - \delta \right)$$

où $\alpha_j^*$ désigne les paramètres $\alpha_j$ de diffusion Compton, contenus dans le vecteur $\alpha^*$ et ayant été calculés.

Suivant un deuxième mode de réalisation de l'étape E4, le calculateur CAL calcule les projections $P_a^{(n)}$ acquises selon l'équation suivante :

$$P_a^{(n)} = P^{(n)}$$

Le calculateur traite les N images $\hat{P}^{(n)}$ calculées en leur appliquant la fonction $u$ (calculée selon le calcul décrit ci-dessus) dépendant des paramètres $c_k$ d'étalonnage de durcissement de faisceau de rayons X (pour reproduire ainsi le durcissement de faisceau), puis en les convoluant avec le noyau $\delta + \boldsymbol{K}$ ayant été calculé (calculé selon le calcul décrit ci-dessus) en fonction des paramètres $\alpha_j$ de diffusion Compton (reproduction de la diffusion Compton sur les N images $\hat{P}^{(n)}$ calculées), pour obtenir les N images simulées $P_s^{(n)}$ selon les équations suivantes :

$$P_s^{(n)} = \left( u\left(\hat{P}^{(n)}\right) \right) * (\delta + \boldsymbol{K})$$

Au cours de la huitième étape E5 d'analyse de la pièce 200 réelle, postérieure à l'étape E4, le calculateur CAL identifie des défauts de la pièce 200 par comparaison des N projections $P^{(n)}$ traitées aux N images $\hat{P}^{(n)}$ calculées traitées.

Le calculateur CAL identifie des défauts de la pièce 200 par comparaison des N projections acquises $P_a^{(n)}$ aux N images simulées $P_s^{(n)}$ suivant l'un des modes de réalisation décrits ci-dessus. Le calculateur CAL effectue une identification de défauts de la pièce par comparaison des images acquises $P^{(n)}$ et simulées $\hat{P}^{(n)}$ ayant pris en compte la correction ou le traitement soit sur les unes soit sur les autres.

Le calculateur CAL calcule N résidus $\rho^{(n)}$ de projection, égaux à la différence entre les projections acquises $P_a^{(n)}$ et les images simulées $P_s^{(n)}$ suivant l'équation :

$$\rho^{(n)} = P_a^{(n)} - P_s^{(n)}$$

Le calculateur CAL enregistre dans la mémoire MEM les N projections acquises $P_a^{(n)}$ et/ ou les N images simulées $P_s^{(n)}$ et/ ou les N résidus $\rho^{(n)}$ de projection. Le calculateur CAL analyse ces N résidus $\rho^{(n)}$ de projection afin d'identifier des défauts inhérents à la pièce 200 inspectée. Le calculateur CAL peut fournir sur l'interface INT2 de sortie ces N résidus $\rho^{(n)}$ de projection et/ ou les défauts identifiés à partir de ces N résidus $\rho^{(n)}$ de projection. Le calculateur CAL peut fournir sur l'interface INT2 de sortie un certificat de validité ou d'invalidité de la pièce, déterminé par le calculateur CAL à partir des N résidus $\rho^{(n)}$ de projection. Le calculateur CAL ou l'utilisateur peut, sur la base des N projections acquises $P_a^{(n)}$ et/ou des N images simulées $P_s^{(n)}$ et/ou des N résidus $\rho^{(n)}$ de projection, sanctionner la pièce 200 comme étant non valide car ayant trop de défauts, soit valider la pièce 200 comme étant valide car n'ayant pas trop de défauts.

Suivant un mode de réalisation de l'invention, le vecteur $\boldsymbol{p}$ regroupe l'un à la suite de l'autre l'ensemble des $K_1$ paramètres $p_i$ de la géométrie de projection, des $K_3$ paramètres $c_k$ de durcissement de faisceau du rayonnement dans la pièce 200 et des $K_2$ paramètres $\alpha_j$ de diffusion Compton du rayonnement et a donc une dimension de $K_1 + K_2 + K_3$. D'une manière correspondante, le vecteur $\boldsymbol{s}_p^{(n)}$ regroupe l'un à la suite de l'autre l'ensemble des $K_1$ champs de sensibilité $s_{p_i}^{(n)}$, des $K_3$ champs $s_{c_k}^{(n)}$ de sensibilité et des $K_2$ champs $s_{\alpha_j}^{(n)}$ de sensibilité et a donc une dimension de $K_1 + K_2 + K_3$. D'une manière correspondante, le vecteur $\delta p$ regroupe l'un à la suite de l'autre l'ensemble des variations des $K_1$ paramètres $p_i$ de la géométrie de projection, des $K_3$ paramètres $c_k$ de durcissement de faisceau du rayonnement dans la pièce 200 et des $K_2$ paramètres $\alpha_j$ de diffusion Compton du rayonnement et a donc une dimension de $K_1 + K_2 + K_3$.

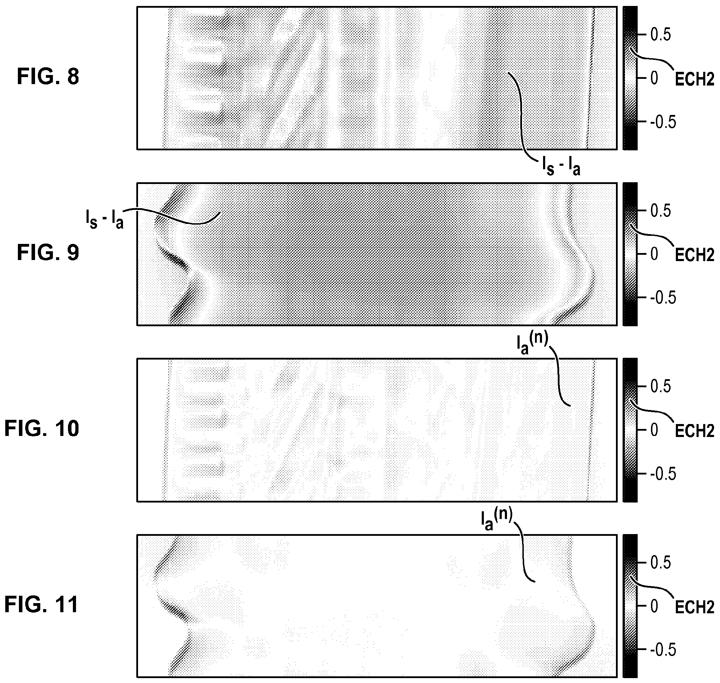

La figure 10 montre un exemple de différence entre, d'une part l'image d'intensité acquise corrigée $I_a^{(n)} = I_0 \exp\left(-P_a^{(n)}\right)$ ayant été obtenue suivant l'invention à partir de la projection acquise $P^{(n)}$, où $I_0$ est un réglage prescrit à partir des projections $P^{(n)}$ acquises, et d'autre part l'image d'intensité simulée corrigée $I_s^{(n)} = \exp\left(P_s^{(n)}\right)$ ayant été obtenue à partir de la projection simulée $P_s^{(n)}$ pour une pale d'aube de turbine de turbomachine. La figure 11 montre un exemple de différence entre, d'une part l'image d'intensité acquise corrigée $I_a^{(n)} = I_0 \exp\left(-P_a^{(n)}\right)$ ayant été obtenue suivant l'invention à partir de la projection acquise $P^{(n)}$, où $I_0$ est un réglage prescrit à partir des projections $P^{(n)}$ acquises, et d'autre part l'image d'intensité simulée $I_s^{(n)} = \exp\left(P_s^{(n)}\right)$ ayant été obtenue à partir de la projection simulée $P_s^{(n)}$ pour un pied d'aube de turbine de turbomachine. Les figures 10 et 11 montrent que l'analyse de la pièce 200 est facilitée par l'invention prenant en compte les artéfacts. Les figure 8 et 9 montrent $I_s - I_a$, sans correction sur $I_a$, et où $I_s$ est généré avec $\boldsymbol{p}_{ini}$, $\boldsymbol{c}_{ini}$ et $\alpha_{ini}$. Les figures 10 et 11 montrent $I_s - I_a$, sans correct ion sur $I_a$, et où $I_s$ est généré avec $p^*$, $c^*$ et $\alpha^*$.

Dans le cas de la combinaison des étapes E3a, E3b et E3c, le fait de prendre en compte les connaissances sur le système d'acquisition (cabine et pièce, étape E3a) et de le coupler à une méthode algorithmique E3a, E3b, E3c de traitement d'imagesadaptée permet un gain significatif sur la qualité de l'information contenue dans les images produites par le système et dans celles reproduites par simulation, et donc de leur différence. Cela permet l'estimation des artefacts (1) du durcissement de faisceau et (2) de la diffusion Compton, dans le cadre de l'analyse de pièces aéronautiques à partir d'un nombre limité de projections multi-vues. L'étape E3a permet l'estimation des paramètres géométriques permettant de lier le modèle MODP de la pièce idéale aux projections acquises de la pièce à contrôler. Cette étape E3a permet de retrouver les paramètres dans le but, notamment, de les utiliser pour simuler numériquement les projections et reproduire des artéfacts dans les images simulées. L'invention permet également à l'étape E4, soit de corriger les artefacts dus au durcissement de faisceau (E3b) dans les projections acquises, soit de les reproduire dans les images simulées ; et de reproduire les artefacts dus à la diffusion Compton (E3c) dans les images simulées ou de les corriger dans les projections acquises. Le système d'acquisition d'images et la suite algorithmique fiabilisent la validation et la sanction des indications de santé matière et des indications de la géométrie tridimensionnelle de la pièce 200 à partir d'un nombre N limité de vues radiographiques par rayons X.

Suivant un mode de réalisation de l'invention, le procédé, le dispositif et le programme suivant l'invention peuvent être mis en œuvre sur une ou plusieurs régions d'intérêt, sélectionnée par un module de sélection du calculateur CAL, dans la projection $P^{(n)}$.

Bien entendu, les modes de réalisation, caractéristiques, possibilités et exemples décrits ci-dessus peuvent être combinés l'un avec l'autre ou être sélectionnés indépendamment l'un de l'autre.

**Revendications**

**1.** Procédé de contrôle non destructif d'une pièce (200) par radiographie en transmission, comportant les étapes suivantes, exécutées par un calculateur (CAL):

acquisition (E1) de N projections ($P^{(n)}$) de la pièce (200) à partir d'un dispositif (100) de radiographie par transmission selon N angles (ANG$^{(n)}$) de vue différents et prédéterminés de la pièce (200), où N est un entier naturel prescrit, génération (E2) de N images ($\hat{P}^{(n)}$) calculées de la pièce (200) à partir d'un modèle (MODP) de référence de la pièce (200) correspondant aux N angles (ANG$^{(n)}$) de vue et à partir d'un vecteur $p$ de paramètres ($p_i$) caractérisant la géométrie de projection de l'acquisition pour les N angles (ANG$^{(n)}$) de vue à chacune de plusieurs itérations successives,

estimation (E3a, E3b, E3c), par les itérations successives, du vecteur $p$ à partir d'un vecteur initial $p = \boldsymbol{p_{ini}}$ et d'au moins l'un d'un vecteur $c$ de paramètres à partir d'un vecteur initial $c = c_{ini}$ et d'un vecteur $\alpha$ de paramètres à partir d'un vecteur initial $\alpha = \alpha_{ini}$, où le vecteur $c$ des paramètres ($c_k$) rend compte du durcissement de faisceau du rayonnement dans la pièce (200) et le vecteur $\alpha$ des paramètres ($\alpha_j$) caractérise la diffusion Compton du rayonnement dans la pièce (200), par minimisation du carré de la somme des normes des différences au carré entre les N projections ($P^{(n)}$) acquises et les N images ($\hat{P}^{(n)}$) calculées,

traitement (E4) des N projections ($P^{(n)}$) et/ou des N images ($\hat{P}^{(n)}$) calculées comprenant un premier traitement et/ ou un deuxième traitement, le premier traitement comportant une correction du durcissement de faisceau sur les N projections ($P^{(n)}$) à partir du vecteur $c$ ayant été estimé ou une génération du durcissement de faisceau sur les N images ($\hat{P}^{(n)}$) calculées à partir du vecteur $c$ ayant été estimé, le deuxième traitement comportant une correction de la diffusion Compton sur les N projections ($P^{(n)}$) à partir du vecteur $\alpha$ ayant été estimé ou une génération de la diffusion Compton sur les N images ($\hat{P}^{(n)}$) calculées à partir du vecteur $\alpha$ ayant été estimé,

identification (E5) de défauts de la pièce (200) par comparaison des N projections ($P^{(n)}$) traitées aux N images ($\hat{P}^{(n)}$) calculées traitées.

2. Procédé suivant la revendication 1, **caractérisé en ce qu'**il comporte à chaque itération l'estimation (E3a) du vecteur $p$ des paramètres $p_i$ de la géométrie de projection de l'acquisition pour les N angles (ANG$^{(n)}$) de vue par le calculateur (CAL), cette estimation comportant:

le calcul de résidus de projection $\rho_{\boldsymbol{p}}^{(n)} = P^{(n)} - \hat{P}^{(n)}$ à partir du vecteur des valeurs initiales $\boldsymbol{p = p_{ini}}$,

le calcul de champs $s_{p_i}^{(n)}$ de sensibilité selon

$$s_{p_i}^{(n)} = \left.\frac{\partial \hat{P}^{(n)}}{\partial p_i}\right|_{\boldsymbol{p}}$$

à partir du vecteur des valeurs initiales $p = \boldsymbol{p_{ini}}$ où

$\hat{P}^{(n)}$ sont les N images calculées pour les N angles (ANG$^{(n)}$) de vue, $P^{(n)}$ sont les N projections acquises de la pièce (200), $\boldsymbol{p}$ est le vecteur colonne des paramètres $p_i$ de la géométrie de projection, $\boldsymbol{p_{ini}}$ est un vecteur colonne des valeurs initiales prescrites des paramètres $p_i$ de la géométrie de projection, $n$ est un entier naturel désignant le numéro de l'angle (ANG$^{(n)}$) de vue et allant de 1 à N, $\boldsymbol{p}$ est mis à jour selon $p^* = p + \delta p^*$, où $\boldsymbol{p}^*$ est le vecteur colonne des paramètres $p_i$ de la géométrie de projection mis à jour, $\delta p^*$ est le vecteur colonne de variation des paramètres $p_i$ de la géométrie de projection et est calculé comme le $\delta p$ minimisant la somme des normes des différences au carré entre les résidus de projection $\rho_{\boldsymbol{p}}^{(n)}$ et le produit de $\delta p$ par $\mathbf{s}_{\boldsymbol{p}}^{(n)}$ pour $n$ allant de 1 à N,

$$\boldsymbol{\delta p}^* = \arg\min_{\boldsymbol{\delta p}} \sum_{(n)} \left\| \rho_{\boldsymbol{p}}^{(n)} - \mathbf{s}_{\boldsymbol{p}}^{(n)} \boldsymbol{\delta p} \right\|^2$$

où $\delta p$ est un vecteur colonne, $\mathbf{s}_{\boldsymbol{p}}^{(n)}$ est la matrice des champs $s_{p_i}^{(n)}$ de sensibilité.

3. Procédé suivant l'une quelconque des revendications précédentes, **caractérisé en ce qu'**il comporte à chaque itération l'estimation (E3b) du vecteur $c$ des paramètres $c_k$ d'étalonnage de durcissement de faisceau du rayonnement dans la pièce (200) par le calculateur (CAL), cette estimation comportant:

le calcul de résidus de projection $\rho_c^{(n)} = P^{(n)} - \breve{P}^{(n)}$ à partir du vecteur des valeurs initiales $c = \boldsymbol{c_{ini}}$

le calcul de champs $s_{c_k}^{(n)}$ de sensibilité selon

$$s_{c_k}^{(n)} = \frac{\partial \breve{P}^{(n)}}{\partial c_k}\Bigg|_c$$

à partir du vecteur des valeurs initiales $c = c_{ini}$, où $\breve{P}^{(n)}(x) = u\left(\hat{P}^{(n)}(x)\right)$ est l'image obtenue en appliquant la fonction $u(y)$ à l'intensité y de chacun des pixels x de $\hat{P}^{(n)}$, $\hat{P}^{(n)}$ sont les N images calculées pour les N angles (ANG$^{(n)}$) de vue, $P^{(n)}$ sont les N projections acquises de la pièce (200), c est le vecteur colonne des paramètres $c_k$ d'étalonnage de durcissement de faisceau, $c_{ini}$ est un vecteur colonne des valeurs initiales prescrites des paramètres $c_k$ d'étalonnage de durcissement de faisceau de rayonnement dans la pièce (200), $\varphi_k(y)$ est une base de fonctions de forme prescrites,

$$u(y) = \sum_{k=1}^{K_3} c_k \, \varphi_k(y)$$

$K_3$ est un entier naturel prescrit supérieur ou égal à 1, $k$ est un entier naturel allant de 1 à $K_3$, $c$ est mis à jour selon $c^* = c + \delta c^*$, où $c^*$ est le vecteur colonne des paramètres $c_k$ d'étalonnage de durcissement de faisceau de rayonnement dans la pièce (200), ayant été mis à jour, $\delta c^*$ est le vecteur colonne de variation des paramètres $c_k$ d'étalonnage de durcissement de faisceau de rayonnement dans la pièce (200) et est calculé comme le $\delta c$ minimisant la somme des normes des différences au carré entre les résidus de projection $\rho_c^{(n)}$ et le produit de $\delta c$ par $s_c^{(n)}$ pour $n$ allant de 1 à N,

$$\delta c^* = \arg\min_{\delta c} \sum_{(n)} \left\| \rho_c^{(n)} - s_c^{(n)} \, \delta c \right\|^2$$

où $\delta c$ est un vecteur colonne, $s_c^{(n)}$ est la matrice des champs $s_{c_k}^{(n)}$ de sensibilité.

**4.** Procédé suivant l'une quelconque des revendications précédentes, **caractérisé en ce qu'**il comporte à chaque itération l'estimation (E3c) du vecteur $\alpha$ des paramètres $\alpha_j$ de diffusion Compton du rayonnement dans la pièce (200) par le calculateur (CAL), cette estimation comportant:

le calcul de résidus de projection $\rho_\alpha^{(n)} = P^{(n)} - \tilde{P}^{(n)}$ à partir du vecteur des valeurs initiales $\alpha = \alpha_{ini}$,

le calcul de champs $s_{\alpha_j}^{(n)}$ de sensibilité selon

$$s_{\alpha_j}^{(n)} = \frac{\partial \tilde{P}^{(n)}}{\partial \alpha_j}\Bigg|_\alpha$$

à partir du vecteur des valeurs initiales $\alpha = \alpha_{ini}$, où $P^{(n)}$ sont les N projections acquises de la pièce (200), $\hat{P}^{(n)}$ sont les N images calculées pour les N angles (ANG$^{(n)}$) de vue, $\tilde{P}^{(n)} = \breve{P}^{(n)} + \breve{P}^{(n)} * K$ est l'image obtenue en convoluant des images $\breve{P}^{(n)}$ simulées, ayant été obtenues à partir au moins des N images $\hat{P}^{(n)}$ calculées, avec le noyau $\delta + K$, $\alpha$ est le vecteur colonne des paramètres $\alpha_j$ de diffusion Compton du rayonnement dans la pièce (200), $\alpha_{ini}$ est un vecteur colonne des valeurs initiales prescrites des paramètres $\alpha_j$ de diffusion Compton du rayonnement dans la pièce (200) **K** est le noyau de convolution défini par

$$K(\boldsymbol{x}) = \sum_{j=1}^{K_2} \alpha_j \left( g_{\sigma_j}(\boldsymbol{x}) - \delta(\boldsymbol{x}) \right)$$

$K_2$ est un entier naturel prescrit supérieur ou égal à 1, j est un entier naturel allant de 1 à $K_2$, $g_{\sigma j}$ un noyau gaussien bidimensionnel d'écart-type $\sigma_j$ prescrit, $\delta(x)$ est la fonction de Dirac au pixel $x$, $\alpha$ est mis à jour selon $\alpha^* = \alpha + \delta\alpha^*$, où $\alpha^*$ est le vecteur colonne des paramètres $\alpha_j$ de diffusion Compton du rayonnement dans la pièce (200), ayant été mis à jour, $\delta\alpha^*$ est le vecteur colonne de variation des paramètres $\alpha_j$ de diffusion Compton du rayonnement dans la pièce (200) et est calculé comme le $\delta\alpha$ minimisant la somme des normes des différences au carré entre les résidus de projection $\rho_{\alpha}^{(n)}$ et le produit de $\delta\alpha$ par $\mathbf{s}_{\alpha}^{(n)}$ pour $n$ allant de 1 à N,

$$\boldsymbol{\delta\alpha}^* = \arg\min_{\boldsymbol{\delta\alpha}} \sum_{(n)} \left\| \rho_{\alpha}^{(n)} - \mathbf{s}_{\alpha}^{(n)} \boldsymbol{\delta\alpha} \right\|^2$$

où $\delta\alpha$ est un vecteur colonne, $\mathbf{s}_{\alpha}^{(n)}$ est la matrice *des champs* $s_{\alpha_j}^{(n)}$ de sensibilité.

5. Procédé suivant les revendications 3 et 4 prises ensemble, **caractérisé en ce que** $\breve{P}^{(n)}(\boldsymbol{x}) = u(\hat{P}^{(n)}(\boldsymbol{x}))$ est l'image simulée, obtenue en appliquant la fonction $u(y)$ à l'intensité de chacun des pixels $x$ de l'image calculée $\hat{P}^{(n)}$.

6. Procédé suivant l'une quelconque des revendications précédentes, **caractérisé en ce que** N est inférieur ou égal à 1000.

7. Programme d'ordinateur, comportant des instructions de code pour la mise en œuvre des étapes suivantes d'un procédé de contrôle non destructif d'une pièce (200) par radiographie par transmission, lorsqu'il est exécuté par un calculateur (CAL) :

réception (E1) de N projections ($P^{(n)}$) de la pièce (200) à partir d'un dispositif (100) de radiographie par transmission selon N angles ($ANG^{(n)}$) de vue différents et prédéterminés de la pièce (200), où N est un entier naturel prescrit,
génération (E2) de N images ($\hat{P}^{(n)}$) calculées de la pièce (200) à partir d'un modèle (MODP) de référence de la pièce (200) correspondant aux N angles ($ANG^{(n)}$) de vue et à partir d'un vecteur $p$ de paramètres ($p_i$) caractérisant la géométrie de projection de l'acquisition pour les N angles ($ANG^{(n)}$) de vue à chacune de plusieurs itérations successives,
estimation (E3a, E3b, E3c), par les itérations successives, du vecteur $p$ à partir d'un vecteur initial $p = \boldsymbol{p_{ini}}$ et d'au moins l'un d'un vecteur c de paramètres à partir d'un vecteur initial $\boldsymbol{c} = \boldsymbol{c_{ini}}$ et d'un vecteur $\alpha$ de paramètres à partir d'un vecteur initial $\alpha = \alpha_{ini}$, où le vecteur $c$ des paramètres ($c_k$) rend compte du durcissement de faisceau du rayonnement dans la pièce (200) et le vecteur $\alpha$ des paramètres ($\alpha_j$) caractérise la diffusion Compton du rayonnement dans la pièce (200), par minimisation de la somme des normes des différences au carré du carré de la norme des différences entre les N projections ($P^{(n)}$) acquises et les N images ($\hat{P}^{(n)}$) calculées,
traitement (E4) des N projections ($P^{(n)}$) et/ou des N images ($\hat{P}^{(n)}$) calculées comprenant un premier traitement et/ou un deuxième traitement, le premier traitement comportant une correction du durcissement de faisceau sur les N projections ($P^{(n)}$) à partir du vecteur $c$ ayant été estimé ou une génération du durcissement de faisceau sur les N images ($\hat{P}^{(n)}$) calculées à partir du vecteur c ayant été estimé, le deuxième traitement comportant une correction de la diffusion Compton sur les N projections ($P^{(n)}$) à partir du vecteur $\alpha$ ayant été estimé ou une génération de la diffusion Compton sur les N images ($P^{(n)}$) calculées à partir du vecteur $\alpha$ ayant été estimé,
identification (E5) de défauts de la pièce (200) par comparaison des N projections ($P^{(n)}$) traitées aux N images ($\hat{P}^{(n)}$) calculées traitées.

8. Dispositif de contrôle non destructif d'une pièce (200) par radiographie en transmission, comportant : un dispositif (100) de radiographie en transmission, pour l'acquisition (E1) de N projections ($P^{(n)}$) de la pièce (200) selon N angles ($ANG^{(n)}$) de vue différents et prédéterminés de la pièce (200), où N est un entier naturel prescrit, un calculateur (CAL) configuré pour effectuer les étapes suivantes :

génération (E2) de N images ($\hat{P}^{(n)}$) calculées de la pièce (200) à partir d'un modèle (MODP) de référence de la pièce (200) correspondant aux N angles (ANG$^{(n)}$) de vue et à partir d'un vecteur *p* de paramètres ($p_i$) caractérisant la géométrie de projection de l'acquisition pour les N angles (ANG$^{(n)}$) de vue à chacune de plusieurs itérations successives,

estimation (E3a, E3b, E3c), par les itérations successives, du vecteur *p* à partir d'un vecteur initial $\boldsymbol{p} = \boldsymbol{p_{ini}}$ et d'au moins l'un d'un vecteur *c* de paramètres à partir d'un vecteur initial $\boldsymbol{c} = \boldsymbol{c_{ini}}$ et d'un vecteur $\alpha$ de paramètres à partir d'un vecteur initial $\alpha = \alpha_{ini}$, où le vecteur *c* des paramètres ($c_k$) rend compte du durcissement de faisceau du rayonnement dans la pièce (200) et le vecteur $\alpha$ des paramètres ($\alpha_j$) caractérise la diffusion Compton du rayonnement dans la pièce (200), par minimisation de la somme des normesdes différences au carré entre les N projections ($P^{(n)}$) acquises et les N images ($\hat{P}^{(n)}$) calculées,

traitement (E4) des N projections ($P^{(n)}$) et/ou des N images ($\hat{P}^{(n)}$) calculées comprenant un premier traitement et/ou un deuxième traitement, le premier traitement comportant une correction du durcissement de faisceau sur les N projections ($P^{(n)}$) à partir du vecteur *c* ayant été estimé ou une génération du durcissement de faisceau sur les N images ($\hat{P}^{(n)}$) calculées à partir du vecteur c ayant été estimé, le deuxième traitement comportant une correction de la diffusion Compton sur les N projections ($P^{(n)}$) à partir du vecteur $\alpha$ ayant été estimé ou une génération de la diffusion Compton sur les N images ($\hat{P}^{(n)}$) calculées à partir du vecteur $\alpha$ ayant été estimé,

identification (E5) de défauts de la pièce (200) par comparaison des N projections ($P^{(n)}$) traitées aux N images ($\hat{P}^{(n)}$) calculée straitées.

## Patentansprüche

1. Verfahren zur zerstörungsfreien Prüfung eines Teils (200) durch Durchstrahlungsradiographie, das die folgenden Schritte umfasst, die von einem Rechner (CAL) ausgeführt werden:

Erfassung (E1) von N Projektionen ($P^{(n)}$) des Teils (200) von einer Durchstrahlungsradiographievorrichtung (100) aus unter N verschiedenen und vorbestimmten Blickwinkeln (ANG$^{(n)}$) auf das Teil (200), wobei N eine vorgeschriebene natürliche Zahl ist, Erzeugung (E2) von N berechneten Bildern ($\hat{P}^{(n)}$) des Teils (200) ausgehend von einem Referenzmodell (MODP) des Teils (200) entsprechend den N Blickwinkeln (ANG$^{(n)}$) und ausgehend von einem Vektor *p* von Parametern ($p_i$), die die Projektionsgeometrie der Erfassung für die N Blickwinkel (ANG$^{(n)}$) in jeder von mehreren aufeinanderfolgenden Iterationen charakterisieren,

Schätzen (E3a, E3b, E3c), durch die aufeinanderfolgenden Iterationen, des Vektors *p* aus einem Anfangsvektor $\boldsymbol{p} = \boldsymbol{p_{ini}}$ und mindestens eines eines Vektors *c* von Parametern aus einem Anfangsvektor $\boldsymbol{c} = \boldsymbol{c_{ini}}$ und eines Vektors $\alpha$ von Parametern aus einem Anfangsvektor $\alpha = \alpha_{ini}$, wobei der Vektor *c* von Parametern ($c_k$) die Strahlverhärtung der Strahlung in dem Teil (200) charakterisiert und der Vektor $\alpha$ von Parametern ($\alpha_j$) die Compton-Streuung der Strahlung in dem Teil (200) charakterisiert, durch Minimierung des Quadrats der Summe der quadrierten Normen der Differenzen zwischen den N erfassten Projektionen ($P^{(n)}$) und den N berechneten Bildern ($\hat{P}^{(n)}$),

Verarbeitung (E4) der N Projektionen ($P^{(n)}$) und/oder der N berechneten Bilder ($\hat{P}^{(n)}$), die eine erste Verarbeitung und/oder eine zweite Verarbeitung umfasst, wobei die erste Verarbeitung eine Korrektur der Strahlverhärtung auf den N Projektionen ($P^{(n)}$) aus dem Vektor *c*, der geschätzt worden ist, oder eine Erzeugung der Strahlverhärtung auf den N berechneten Bildern ($\hat{P}^{(n)}$) aus dem Vektor *c*, der geschätzt worden ist, umfasst, wobei die zweite Verarbeitung eine Korrektur der Compton-Streuung an den N Projektionen ($P^{(n)}$) aus dem Vektor $\alpha$, der geschätzt worden ist, oder eine Erzeugung der Compton-Streuung an den N berechneten Bildern ($\hat{P}^{(n)}$) aus dem Vektor $\alpha$, der geschätzt worden ist, umfasst,

Identifizierung (E5) von Defekten des Teils (200) durch Vergleich der N verarbeiteten Projektionen ($P^{(n)}$) mit den N verarbeiteten berechneten Bildern ($\hat{P}^{(n)}$).

2. Verfahren nach Anspruch 1, **dadurch gekennzeichnet, dass** es bei jeder Iteration die Schätzung (E3a) des Vektors *p* der Parameter $p_i$ der Projektionsgeometrie der Erfassung für die N Blickwinkel (ANG$^{(n)}$) durch den Rechner (CAL) umfasst, wobei diese Schätzung umfasst :

die Berechnung von Projektionsresiduen $\rho_{\boldsymbol{p}}^{(n)} = P^{(n)} - \hat{P}^{(n)}$ aus dem Vektor der Anfangswerte $\boldsymbol{p} = \boldsymbol{p_{ini}}$,

die Berechnung von Sensitivitätsfeldern $S_{p_i}^{(n)}$ gemäß

$$s_{p_i}^{(n)} = \left. \frac{\partial \hat{P}^{(n)}}{\partial p_i} \right|_{\boldsymbol{p}}$$

aus dem Vektor der Anfangswerte $\boldsymbol{p} = \boldsymbol{p_{ini}}$,
wobei

$\hat{P}^{(n)}$ die N Bilder, die für die N Blickwinkel (ANG$^{(n)}$)) berechnet wurden, sind,

$P^{(n)}$ die N erfassten Projektionen des Teils (200) sind,

$\boldsymbol{p}$ der Spaltenvektor der Parameter $p_i$ der Projektionsgeometrie ist,

$\boldsymbol{p_{ini}}$ ein Spaltenvektor der vorgeschriebenen Anfangswerte der Parameter $p_i$ der Projektionsgeometrie ist,

$n$ ist eine natürliche Zahl, die die Nummer des Blickwinkels (ANG$^{(n)}$) bezeichnet und von 1 bis N reicht,

$\boldsymbol{p}$ gemäß $\boldsymbol{p^*} = \boldsymbol{p} + \boldsymbol{\delta p^*}$ aktualisiert wird, wobei

$\boldsymbol{p^*}$ der Spaltenvektor der Parameter $p_i$ der Projektionsgeometrie ist, der aktualisiert wird, $\boldsymbol{\delta p^*}$ der Spaltenvektor der Variation der Parameter $p_i$ der Projektionsgeometrie ist und als $\delta \boldsymbol{p}$ berechnet wird, der die Summe der quadrierten Normwerte der Differenzen zwischen den Projektionsresten $\rho_{\boldsymbol{p}}^{(n)}$ und dem Produkt von $\delta \boldsymbol{p}$

durch $\mathbf{s}_{\boldsymbol{p}}^{(n)}$ für $n$ von 1 bis N minimiert,

$$\boldsymbol{\delta p^*} = \arg \min_{\boldsymbol{\delta p}} \sum_{(n)} \left\| \rho_{\boldsymbol{p}}^{(n)} - \mathbf{s}_{\boldsymbol{p}}^{(n)} \, \boldsymbol{\delta p} \right\|^2$$

wobei $\boldsymbol{\delta p}$ ein Spaltenvektor ist, $\mathbf{s}_{\boldsymbol{p}}^{(n)}$ die Matrix der Sensitivitätsfelder $s_{p_i}^{(n)}$ ist.

3. Verfahren nach einem der vorhergehenden Ansprüche, **dadurch gekennzeichnet, dass** es bei jeder Iteration die Schätzung (E3b) des Vektors $\boldsymbol{c}$ der Kalibrierungsparameter $c_k$ der Strahlhärtung der Strahlung in dem Teil (200) durch den Rechner (CAL) umfasst, wobei diese Schätzung umfasst:

die Berechnung von Projektionsresiduen $\rho_c^{(n)} = P^{(n)} - \breve{P}^{(n)}$ aus dem Vektor der Anfangswerte $\boldsymbol{c} = \boldsymbol{c_{ini}}$,

die Berechnung von Empfindlichkeitsfeldern $s_{c_k}^{(n)}$ gemäß

$$s_{c_k}^{(n)} = \left. \frac{\partial \breve{P}^{(n)}}{\partial c_k} \right|_{\boldsymbol{c}}$$

aus dem Vektor der Ausgangswerte $\boldsymbol{c} = \boldsymbol{c_{ini}}$,

$\breve{P}^{(n)}(\boldsymbol{x}) = u\left( \hat{P}^{(n)}(\boldsymbol{x}) \right)$
wobei das Bild ist, das durch Anwenden der Funktion $u(y)$ auf die Intensitäty jedes der Pixel $x$ von $\hat{P}^{(n)}$ erhalten wird,

$\hat{P}^{(n)}$ sind die N Bilder, die für die N Blickwinkel (ANG$^{(n)}$) berechnet wurden,

$P^{(n)}$ die N erfassten Projektionen des Teils (200) sind,

$\boldsymbol{c}$ der Spaltenvektor der Parameter $c_k$ zur Kalibrierung der Strahlhärtung ist,

$\boldsymbol{c_{ini}}$ ein Spaltenvektor der vorgeschriebenen Anfangswerte der Parameter $c_k$ zur Kalibrierung der Strahlhärtung von Strahlung im Teil (200) ist,

$\varphi_k(y)$ eine Basis von vorgeschriebenen Formfunktionen ist,

$$u(y) = \sum_{k=1}^{K_3} c_k \, \varphi_k(y)$$

$K_3$ eine vorgeschriebene natürliche Zahl größer oder gleich 1 ist,

$k$ eine natürliche Zahl von 1 bis $K_3$ ist,

$c$ gemäß $c^* = c + \delta c^*$ aktualisiert wird, wobei

$c^*$ der Spaltenvektor der Parameter $c_k$ der Kalibrierung der Strahlhärtung im Teil (200) ist, der aktualisiert wurde,

$\delta c^*$ der Spaltenvektor der Variation der Parameter $c_k$ der Strahlhärtungskalibrierung im Teil (200) ist und als $\delta c$

berechnet wird, der die Summe der quadrierten Normen der Differenzen zwischen den Projektionsresten $\rho_c^{(n)}$

und dem Produkt von $\delta c$ durch $\mathbf{s}_c^{(n)}$ für $n$ von 1 bis N minimiert,

$$\delta c^* = \arg\min_{\delta c} \sum_{(n)} \left\| \rho_c^{(n)} - \mathbf{s}_c^{(n)}\,\delta c \right\|^2$$

wobei $\delta c$ ein Spaltenvektor ist, $\mathbf{s}_c^{(n)}$ die Matrix der Sensitivitätsfelder $s_{c_k}^{(n)}$ ist.

4. Verfahren nach einem der vorhergehenden Ansprüche, **dadurch gekennzeichnet, dass** es bei jeder Iteration die Schätzung (E3c) des Vektors $\alpha$ der Parameter $\alpha_j$ der Compton-Streuung der Strahlung in dem Teil (200) durch den Rechner (CAL) umfasst, wobei diese Schätzung umfasst :

die Berechnung von Projektionsresiduen $\rho_\alpha^{(n)} = P^{(n)} - \tilde{P}^{(n)}$ aus dem Vektor der Anfangswerte $\alpha = \alpha_{ini}$,

die Berechnung von Empfindlichkeitsfeldern $s_{\alpha_j}^{(n)}$ gemäß

$$s_{\alpha_j}^{(n)} = \left. \frac{\partial \tilde{P}^{(n)}}{\partial \alpha_j} \right|_\alpha$$

aus dem Vektor der Anfangswerte $\alpha = \alpha_{ini}$,

wobei $P^{(n)}$ die N erfassten Projektionen des Teils (200) sind,

$\hat{P}^{(n)}$ die N Bilder, die für die N Blickwinkel ($ANG^{(n)}$) berechnet wurden, sind,

$\tilde{P}^{(n)} = \breve{P}^{(n)} + \breve{P}^{(n)} * K$ das Bild ist, das durch Konvolution der simulierter Bilder $\breve{P}^{(n)}$, die aus mindestens den N berechneten Bildern $\hat{P}^{(n)}$ erhalten wurden, mit dem Kern $\delta + K$ erhalten wird,

$\alpha$ ist der Spaltenvektor der Parameter $\alpha_j$ der Compton-Streuung der Strahlung in dem Teil (200),

$\alpha_{ini}$ ein Spaltenvektor der vorgeschriebenen Anfangswerte der Compton-Streuparameter $\alpha_j$ der Strahlung in dem Teil (200) ist.

$K$ ist der Konvolutionskern, der definiert ist als

$$K(x) = \sum_{j=1}^{K_2} \alpha_j \left( g_{\sigma_j}(x) - \delta(x) \right)$$

$K_2$ eine vorgeschriebene natürliche Zahl größer oder gleich 1 ist,

$j$ eine natürliche Zahl von 1 bis $K_2$ ist,

$g_{\sigma_j}$ ein zweidimensionaler Gaußscher Kern mit der vorgeschriebenen Standardabweichung $\sigma_j$ ist,

$\delta(x)$ ist die Dirac-Funktion am Pixel $x$ ist,

$\alpha$ gemäß $\alpha^* = \alpha + \delta\alpha^*$ aktualisiert wird, wobei

$\alpha^*$ der Spaltenvektor der Parameter $\alpha_j$ der Compton-Streuung der Strahlung im Teil (200) ist, der aktualisiert wurde,

$\delta\alpha^*$ der Spaltenvektor der Variation der Compton-Streuparameter $\alpha_j$ der Strahlung im Teil (200) ist und als $\delta\alpha$

berechnet wird, der die Summe der quadrierten Normen der Differenzen zwischen den Projektionsresten $\rho_\alpha^{(n)}$

und dem Produkt von $\delta\alpha$ durch $\mathbf{s}_\alpha^{(n)}$ für $n$ von 1 bis N minimiert,

$$\boldsymbol{\delta\alpha}^* = \arg\min_{\boldsymbol{\delta\alpha}} \sum_{(n)} \left\| \rho_\alpha^{(n)} - \mathbf{s}_\alpha^{(n)}\, \boldsymbol{\delta\alpha} \right\|^2$$

wobei $\delta\alpha$ ein Spaltenvektor ist, $\mathbf{s}_\alpha^{(n)}$ die Matrix der Empfindlichkeitsfelder $s_{\alpha_j}^{(n)}$ ist.

5. Verfahren nach den Ansprüchen 3 und 4 zusammen genommen, **dadurch gekennzeichnet, dass** $\breve{P}^{(n)}(\boldsymbol{x}) = u(\hat{P}^{(n)}(\boldsymbol{x}))$ das simulierte Bild ist, das durch Anwendung der Funktion $u(y)$ auf die Intensität jedes der Pixel $x$ des berechneten Bildes $\hat{P}^{(n)}$ erhalten wird.

6. Verfahren nach einem der vorhergehenden Ansprüche, **dadurch gekennzeichnet, dass** N kleiner oder gleich 1000 ist.

7. Computerprogramm, das Codeanweisungen für die Durchführung der folgenden Schritte eines Verfahrens zur zerstörungsfreien Prüfung eines Teils (200) durch Durchstrahlungsradiographie enthält, wenn es von einem Rechner (CAL) ausgeführt wird:

Empfang (E1) von N Projektionen ($P^{(n)}$) des Teils (200) von einer Durchstrahlungsradiographievorrichtung (100) unter N verschiedenen und vorbestimmten Blickwinkeln (ANG$^{(n)}$) auf das Teil (200), wobei N eine vorgeschriebene natürliche Zahl ist,

Erzeugung (E2) von N berechneten Bildern ($\hat{P}^{(n)}$) des Teils (200) ausgehend von einem Referenzmodell (MODP) des Teils (200) entsprechend den N Blickwinkeln (ANG$^{(n)}$) und ausgehend von einem Vektor $\boldsymbol{p}$ von Parametern ($p_i$), die die Projektionsgeometrie der Erfassung für die N Blickwinkel (ANG$^{(n)}$) in jeder von mehreren aufeinanderfolgenden Iterationen charakterisieren,

Schätzen (E3a, E3b, E3c), durch die aufeinanderfolgenden Iterationen, des Vektors $\boldsymbol{p}$ aus einem Anfangsvektor $\boldsymbol{p} = \boldsymbol{p_{ini}}$ und mindestens eines eines Vektors $c$ von Parametern aus einem Anfangsvektor $\boldsymbol{c} = \boldsymbol{c_{ini}}$ und eines Vektors $\alpha$ von Parametern einem Anfangsvektor $\alpha = \alpha_{ini}$, wobei der Vektor $c$ der Parameter ($c_k$) die Strahlver-härtung der Strahlung in dem Teil (200) charakterisiert und der Vektor $\alpha$ der Parameter ($\alpha_j$) die Compton-Streuung der Strahlung in dem Teil (200) charakterisiert, durch Minimierung der Summe der quadrierten Normen der Differenzen zwischen den N erfassten Projektionen ($\hat{P}^{(n)}$) und den N berechneten Bildern ($\hat{P}^{(n)}$),

Verarbeitung (E4) der N Projektionen ($\hat{P}^{(n)}$) und/oder der N berechneten Bilder ($\hat{P}^{(n)}$), die eine erste Verarbeitung und/oder eine zweite Verarbeitung umfasst, wobei die erste Verarbeitung eine Korrektur der Strahlverhärtung auf den N Projektionen ($\hat{P}^{(n)}$) aus dem Vektor $c$, der geschätzt worden ist, oder eine Erzeugung der Strahlverhärtung auf den N berechneten Bildern ($\hat{P}^{(n)}$) aus dem Vektor $c$, der geschätzt worden ist, umfasst, wobei die zweite Verarbeitung eine Korrektur der Compton-Streuung an den N Projektionen ($\hat{P}^{(n)}$) aus dem Vektor $\alpha$, der geschätzt worden ist, oder eine Erzeugung der Compton-Streuung an den N Bildern ($\hat{P}^{(n)}$) aus dem Vektor $\alpha$, der geschätzt worden ist, umfasst,

Identifizierung (E5) von Defekten des Teils (200) durch Vergleich der N verarbeiteten Projektionen ($\hat{P}^{(n)}$) mit den N verarbeiteten berechneten Bildern ($\hat{P}^{(n)}$).

8. Vorrichtung zur zerstörungsfreien Prüfung eines Teils (200) durch Durchstrahlungsradiographie, mit :

einer Durchstrahlungsradiographievorrichtung (100) zur Erfassung (E1) von N Projektionen ($\hat{P}^{(n)}$) des Teils (200) unter N verschiedenen und vorbestimmten Blickwinkeln (ANG$^{(n)}$) auf das Teil (200), wobei N eine vorgeschriebene natürliche Zahl ist,

einem Rechner (CAL), der so konfiguriert ist, dass er die folgenden Schritte ausführt :

Erzeugung (E2) von N berechneten Bildern ($\hat{P}^{(n)}$) des Teils (200) ausgehend von einem Referenzmodell (MODP) des Teils (200) entsprechend den N Blickwinkeln (ANG$^{(n)}$) und ausgehend von einem Vektor $\boldsymbol{p}$ von Parametern ($p_i$), die die Projektionsgeometrie der Erfassung für die Blickwinkel (ANG$^{(n)}$) in jeder von mehreren aufeinanderfolgenden Iterationen charakterisieren,

Schätzen (E3a, E3b, E3c), durch die aufeinanderfolgenden Iterationen, des Vektors $\boldsymbol{p}$ aus einem Anfangs-vektor $\boldsymbol{p} = \boldsymbol{p_{ini}}$ und mindestens eines eines Vektors $c$ von Parametern aus einem Anfangsvektor $\boldsymbol{c} = \boldsymbol{c_{ini}}$ und eines Vektors $\alpha$ von Parametern aus einem Anfangsvektor $\alpha = \alpha_{ini}$, wobei der Vektor $c$ der Parameter ($c_k$) die Strahlverhärtung der Strahlung in dem Teil (200) charakterisiert und der Vektor $\alpha$ der Parameter ($\alpha_j$) die Compton-Streuung der Strahlung in dem Teil (200) charakterisiert, durch Minimierung der Summe der quadrierten Normen der Differenzen zwischen den N erfassten Projektionen ($\hat{P}^{(n)}$) und den N berechneten Bildern ($\hat{P}^{(n)}$),

Verarbeitung (E4) der N Projektionen ($\hat{P}^{(n)}$) und/oder der N berechneten Bilder ($\hat{P}^{(n)}$), die eine erste Verarbeitung und/oder eine zweite Verarbeitung umfasst, wobei die erste Verarbeitung eine Korrektur der Strahlverhärtung auf den N Projektionen ($\hat{P}^{(n)}$) aus dem Vektor $c$, der geschätzt worden ist, oder eine Erzeugung der Strahlverhärtung auf den N berechneten Bildern ($\hat{P}^{(n)}$) aus dem Vektor $c$, der geschätzt worden ist, umfasst, wobei die zweite Verarbeitung eine Korrektur der Compton-Streuung an den N Projektionen ($\hat{P}^{(n)}$) aus dem Vektor $\alpha$, der geschätzt worden ist, oder eine Erzeugung der Compton-Streuung an den N berechneten Bildern ($\hat{P}^{(n)}$) aus dem Vektor $\alpha$, der geschätzt worden ist, umfasst,

Identifizierung (E5) von Defekten des Teils (200) durch Vergleich der N verarbeiteten Projektionen ($\hat{P}^{(n)}$) mit den N verarbeiteten berechneten Bildern ($\hat{P}^{(n)}$).

## Claims

1. A method of non-destructive testing of a part (200) by transmission radiography, comprising the following steps, executed by a calculator (CAL):

   acquiring (E1) of N projections ($P^{(n)}$) of the part (200) using a transmission radiography device (100) from N different and predetermined angles ($ANG^{(n)}$) of view of the part (200), where N is a given natural integer,

   generating (E2) of N computed images ($\hat{P}^{(n)}$) of the part (200) from a reference model (MODP) of the part (200) corresponding to the N angles ($ANG^{(n)}$) of view and from a vector $p$ of parameters ($p_i$) characterizing a projection geometry of acquisition for the N angles ($ANG^{(n)}$) of view at each of several successive iterations,

   estimating (E3a, E3b, E3c), by the successive iterations, of the vector $p$ from an initial vector $p = p_{ini}$ and of at least one of a vector $c$ of parameters from an initial vector $c = c_{ini}$ and of a vector $\alpha$ of parameters from an initial vector $\alpha = \alpha_{ini}$, where the vector c of the parameters ($c_k$) accounts for beam hardening of radiation in the part (200) and the vector $\alpha$ of the parameters ($\alpha_j$) characterizes Compton scattering of the radiation in the part (200), by minimizing the sum of the squared norms of the differences between the N projections ($P^{(n)}$) having been acquired and the N computed images ($\hat{P}^{(n)}$),

   processing (E4) of the N projections ($P^{(n)}$) and/or of the N computed images ($\hat{P}^{(n)}$) comprising a first processing and/or a second processing,

   the first processing comprising a correction of the beam hardening over the N projections ($P^{(n)}$) from the vector $c$ having been estimated or a generation of the beam hardening over the N computed images ($\hat{P}^{(n)}$) from the vector $c$ having been estimated,

   the second processing comprising a correction of the Compton scattering over the N projections ($P^{(n)}$) from the vector $\alpha$ having been estimated or a generation of the Compton scattering over the N computed images ($\hat{P}^{(n)}$) from the vector $\alpha$ having been estimated,

   identifying (E5) of defects of the part (200) by comparison of the N projections ($P^{(n)}$) having been processed with the N computed images ($\hat{P}^{(n)}$) having been processed.

2. The method as claimed in claim 1, **characterized in that** it comprises at each iteration estimating (E3a) of the vector $p$ of the parameters $p_i$ of the projection geometry of the acquisition for the N angles ($ANG^{(n)}$) of view by the calculator (CAL), the estimating comprising:

   computing of projection residuals $\rho_p^{(n)} = P^{(n)} - \hat{P}^{(n)}$ from the initial vector $p = p_{ini}$ of initial values,

   computing of sensitivity fields $s_{p_i}^{(n)}$ according to

   $$s_{p_i}^{(n)} = \left. \frac{\partial \hat{P}^{(n)}}{\partial p_i} \right|_p$$

   from the initial vector $p = p_{ini}$ of the initial values,
   where
   $\hat{P}^{(n)}$ are the N computed images for the N angles ($ANG^{(n)}$) of view,

$P^{(n)}$ are the N projections having been acquired of the part (200),

$p$ is a column vector of the parameters $p_i$ of the projection geometry,

$p_{ini}$ is a column vector of the initial values of the parameters $p_i$ of the projection geometry,

$n$ is a natural integer denoting the number of the angle ($\text{ANG}^{(n)}$) of view and ranging from 1 to N,

$p$ is updated according to $p^* = p + \delta p^*$, where

$p^*$ is a column vector of the parameters $p_i$ of the projection geometry having been updated,

$\delta p^*$ is a column vector of variation of the parameters $p_i$ of the projection geometry and is calculated as a $\delta p$ minimizing the sum of the squared norms of the differences between the projection residuals $\rho_p^{(n)}$ and the product of $\delta p$ by $\mathbf{s}_p^{(n)}$ for $n$ ranging from 1 to N,

$$\delta p^* = \arg\min_{\delta p} \sum_{(n)} \left\| \rho_p^{(n)} - \mathbf{s}_p^{(n)}\, \delta p \right\|^2$$

where $\delta p$ is a column vector, $\mathbf{s}_p^{(n)}$ is a matrix of the sensitivity fields $s_{p_i}^{(n)}$.

3. The method as claimed in any one of the preceding claims, **characterized in that** it comprises at each iteration estimating (E3b) of the vector $c$ of the parameters $c_k$ of calibration of the beam hardening of the radiation in the part (200) by the calculator (CAL), the estimating comprising:

computing of projection residuals $\rho_c^{(n)} = P^{(n)} - \breve{P}^{(n)}$ from the initial vector $c = c_{ini}$ of initial values,

computing of sensitivity fields $s_{c_k}^{(n)}$ according to

$$s_{c_k}^{(n)} = \left. \frac{\partial \breve{P}^{(n)}}{\partial c_k} \right|_c$$

from the initial vector $c = c_{ini}$ of the initial values,

$\breve{P}^{(n)}(x) = u\left( \hat{P}^{(n)}(x) \right)$
where is the image obtained by applying a function $u(y)$ to an intensity $y$ of each of pixels $x$ of $\hat{P}^{(n)}$,

$\hat{P}^{(n)}$ are the N computed images for the N angles ($\text{ANG}^{(n)}$) of view,

$P^{(n)}$ are the N projections having been acquired of the part (200),

$c$ is a column vector of the parameters $c_k$ of calibration of the beam hardening,

$c_{ini}$ is a column vector of the initial prescribed values of the parameters $c_k$ of calibration of the beam hardening of the radiation in the part (200),

$\varphi_k(y)$ is a base of given form functions,

$$u(y) = \sum_{k=1}^{K_3} c_k\, \varphi_k(y)$$

$K_3$ is a given natural integer greater than or equal to 1,

$k$ is a natural integer ranging from 1 to $K_3$,

$c$ is updated according to $c^* = c + \delta c^*$, where

$c^*$ is a column vector of the parameters $c_k$ of calibration of the beam hardening of the radiation in the part (200), having been updated,

$\delta c^*$ is a column vector of variation of the parameters $c_k$ of calibration of the beam hardening of the radiation in the part (200) and is computed as a $\delta c$ minimizing the sum of the squared norms of the differences between the projection residuals $\rho_c^{(n)}$ and the product of $\delta c$ by $\mathbf{s}_c^{(n)}$ for $n$ ranging from 1 to N,

$$\delta \boldsymbol{c}^* = \arg\min_{\delta c} \sum_{(n)} \left\| \rho_c^{(n)} - \mathbf{s}_c^{(n)} \, \delta \boldsymbol{c} \right\|^2$$

where $\delta \boldsymbol{c}$ is a column vector, $\mathbf{s}_c^{(n)}$ is a matrix of the sensitivity fields $s_{c_k}^{(n)}$ .

4. The method as claimed in any of the preceding claims, **characterized in that** it comprises at each iteration estimating (E3c) of the vector $\alpha$ of the parameters $\alpha_j$ of Compton scattering of the radiation in the part (200) by the calculator (CAL), the estimating comprising:

computing of projection residuals $\rho_\alpha^{(n)} = P^{(n)} - \tilde{P}^{(n)}$ from the initial vector $\alpha = \alpha_{ini}$ of the initial values,

computing of sensitivity fields $s_{\alpha_j}^{(n)}$ according to

$$s_{\alpha_j}^{(n)} = \frac{\partial \tilde{P}^{(n)}}{\partial \alpha_j}\bigg|_\alpha$$

from the initial vector $\alpha = \alpha_{ini}$ of the initial values,
where $P^{(n)}$ are the N projections having been acquired of the part (200),
$\hat{P}^{(n)}$ are the N computed images for the N angles (ANG$^{(n)}$) of view,

$$\tilde{P}^{(n)} = \breve{P}^{(n)} + \breve{P}^{(n)} * \boldsymbol{K}$$
is an image obtained by convolution of simulated images $\breve{P}^{(n)}$, having been obtained from at least the N computed images $\hat{P}^{(n)}$, with a kernel $\delta + \boldsymbol{K}$,
$\alpha$ is a column vector of the parameters $\alpha_j$ of Compton scattering of the radiation in the part (200),
$\alpha_{ini}$ is a column vector of the initial values of the parameters $\alpha_j$ of Compton scattering of the radiation in the part (200),
$\boldsymbol{K}$ is a convolution kernel defined by

$$\boldsymbol{K}(\boldsymbol{x}) = \sum_{j=1}^{K_2} \alpha_j \left( g_{\sigma_j}(\boldsymbol{x}) - \delta(\boldsymbol{x}) \right)$$

$K_2$ is a prescribed natural integer greater than or equal to 1,
$j$ is a natural integer ranging from 1 to $K_2$,
$g_{\sigma_j}$, a two-dimensional Gaussian kernel of prescribed standard deviation $\sigma_j$,
$\delta(\boldsymbol{x})$ is a Dirac function at the pixel $\boldsymbol{x}$,
$\alpha$ is updated according to $\alpha^* = \alpha + \delta \alpha^*$, where
$\alpha^*$ is a column vector of the parameters $\alpha_j$ of Compton scattering of the radiation in the part (200), having been updated,
$\delta \alpha^*$ is a column vector of variation of the parameters $\alpha_j$ of Compton scattering of the radiation in the part (200) and is calculated as a $\delta \alpha$ minimizing the sum of the squared norms of the differences between the projection residuals $\rho_\alpha^{(n)}$ and the product of $\delta \alpha$ by $\mathbf{s}_\alpha^{(n)}$ for $n$ ranging from 1 to N,

$$\delta \boldsymbol{\alpha}^* = \arg\min_{\delta \alpha} \sum_{(n)} \left\| \rho_\alpha^{(n)} - \mathbf{s}_\alpha^{(n)} \, \delta \boldsymbol{\alpha} \right\|^2$$

where $\delta \alpha$ is a column vector, $\mathbf{s}_\alpha^{(n)}$ is a matrix of the sensitivity fields $s_{\alpha_j}^{(n)}$ .

5. The method as claimed in claims 3 and 4 taken together, **characterized in that** $\breve{P}^{(n)}(\boldsymbol{x}) = u(\hat{P}^{(n)}(\boldsymbol{x}))$ is the

simulated image, obtained by applying the function $u(y)$ to the intensity of each of the pixels x of the computed image $\hat{P}^{(n)}$.

6. The method as claimed in any of the preceding claims, **characterized in that** N is less than or equal to 1000.

7. A computer program, comprising code instructions for implementing the following steps of a method of non-destructive testing of a part (200) by transmission radiography, when it is executed by a calculator (CAL):

> receiving (E1) of N projections ($P^{(n)}$) of the part (200) from a transmission radiography device (100) from N different and predetermined angles ($ANG^{(n)}$) of view of the part (200), where N is a given natural integer,
> generating (E2) of N computed images ($\hat{P}^{(n)}$) of the part (200) from a reference model (MODP) of the part (200) corresponding to the N angles ($ANG^{(n)}$) of view and from a vector $p$ of parameters ($p_i$) characterizing the projection geometry of the acquisition for the N angles ($ANG^{(n)}$) of view at each of several successive iterations,
> estimating (E3a, E3b, E3c), by the successive iterations, of the vector $p$ from an initial vector $p = p_{ini}$ and of at least one of a vector $c$ of parameters from an initial vector $c = c_{ini}$ and of a vector $\alpha$ of parameters from an initial vector $\alpha = \alpha_{ini}$, where the vector $c$ of the parameters ($c_k$) accounts for the beam hardening of the radiation in the part (200) and the vector $\alpha$ of the parameters ($\alpha_j$) characterizes the Compton scattering of the radiation in the part (200), by minimizing the sum of the norms of the squared differences between the N projections ($P^{(n)}$) having been acquired and the N computed images ($\hat{P}^{(n)}$),
> processing (E4) of the N projections ($P^{(n)}$) and/or of the N computed images ($\hat{P}^{(n)}$) comprising a first processing and/or a second processing,

>> the first processing comprising a correction of the beam hardening over the N projections ($P^{(n)}$) from the vector $c$ having been estimated or a generation of the beam hardening over the N computed images ($\hat{P}^{(n)}$) from the vector $c$ having been estimated,
>> the second processing comprising a correction of the Compton scattering over the N projections ($P^{(n)}$) from the vector $\alpha$ having been estimated or a generation of the Compton scattering over the N computed images ($\hat{P}^{(n)}$) from the vector $\alpha$ having been estimated,

> identifying (E5) of defects of the part (200) by comparison of the N projections ($P^{(n)}$) having been processed with the N computed images ($\hat{P}^{(n)}$) having been processed.

8. A device for non-destructive testing of a part (200) by transmission radiography, comprising:

> a transmission radiography device (100), for acquiring (E1) of N projections ($P^{(n)}$) of the part (200) along N different and predetermined angles ($ANG^{(n)}$) of view of the part (200), where N is a given natural integer,
> a calculator (CAL) configured to carry out the following steps:

>> generating (E2) of N computed images ($\hat{P}^{(n)}$) of the part (200) from a reference model (MODP) of the part (200) corresponding to the N angles ($ANG^{(n)}$) of view and from a vector $p$ of parameters ($p_i$) characterizing the projection geometry of the acquisition for the N angles ($ANG^{(n)}$) of view at each of several successive iterations,
>> estimating (E3a, E3b, E3c), by the successive iterations, of the vector $p$ from an initial vector $p = p_{ini}$ and of at least one of a vector $c$ of parameters from an initial vector $c = c_{ini}$ and of a vector $\alpha$ of parameters from an initial vector $\alpha = \alpha_{ini}$, where the vector c of the parameters ($c_k$) accounts for the beam hardening of the radiation in the part (200) and the vector $\alpha$ of the parameters ($\alpha_j$) characterizes the Compton scattering of the radiation in the part (200), by minimizing the sum of the norms of the squared differences between the N acquired projections ($P^{(n)}$) and the N computed images ($\hat{P}^{(n)}$),
>> processing (E4) of the N projections ($P^{(n)}$) and/or of the N computed images ($\hat{P}^{(n)}$) comprising a first processing and/or a second processing,

>>> the first processing comprising a correction of the beam hardening over the N projections ($P^{(n)}$) from the vector $c$ having been estimated or a generation of the beam hardening over the N computed images ($\hat{P}^{(n)}$) from the vector $c$ having been estimated,
>>> the second processing comprising a correction of the Compton scattering over the N projections ($P^{(n)}$) from the vector $\alpha$ having been estimated or a generation of the Compton scattering over the N computed images ($\hat{P}^{(n)}$) from the vector $\alpha$ having been estimated,
>>> identifying (E5) of defects of the part (200) by comparison of the N projections ($P^{(n)}$) having been processed with the N computed images ($\hat{P}^{(n)}$) having been processed.

**FIG. 1**

EP 4 399 510 B1

EP 4 399 510 B1

**FIG. 2**

# FIG. 3

FIG. 4

## FIG. 5

E1 → E2 → E3a → E3b → E3c → E4 → E5

## FIG. 6

## FIG. 7

**FIG. 8**

$I_s - I_a$

ECH2

0.5

0

-0.5

**FIG. 9**

$I_s - I_a$

ECH2

0.5

0

-0.5

**FIG. 10**

$I_a^{(n)}$

ECH2

0.5

0

-0.5

**FIG. 11**

$I_a^{(n)}$

ECH2

0.5

0

-0.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **R. BOCK et al.** Beam hardening correction with an iterative scheme using an exact backward projector and a polychromatic forward projector. *XP055915705*